# EUROPEAN PATENT APPLICATION

(11) **EP 4 171 107 A1**
(43) Date of publication of application: **26.04.2023**
(21) Application number: 21829523.6
(22) Date of filing: 22.06.2021
(51) Int. Cl.: H04W 24/08

(54) **SIGNAL TRANSMISSION METHOD AND DEVICE**

(30) Priority: 22.06.2020 CN 202010576889
(71) Applicant: Datang Mobile Communications Equipment Co., Ltd., Beijing 100085 (CN)
(72) Inventor: YANG, Meiying, Beijing 100085 (CN); WANG, Jiaqing, Beijing 100085 (CN); LUO, Chen, Beijing 100085 (CN); CHENG, Fang-Chen, Beijing 100085 (CN)
(74) Representative: Cabinet Nony
(86) International application number: PCT/CN2021/101516
(87) International publication number: WO 2021/259250

(57) **Abstract**

The present application provides a signal transmission method and device. The method comprises: determining a third monitoring configuration information set of a first signal, wherein the monitoring opportunities corresponding to the third monitoring configuration information set are not more than the monitoring opportunities corresponding to at least one of a first monitoring configuration information set and a second monitoring configuration information set, the first monitoring configuration information set is a network-level monitoring configuration information set of the first signal, and the second monitoring configuration information set is a node-level monitoring configuration information set of the first signal; and monitoring the first signal according to the third monitoring configuration information set, thereby reducing the power consumption of a terminal for monitoring the first signal.

## Description

### Cross-Reference of Related Applications

The present application claims the priority from Chinese Patent Application No. 202010576889.3, filed with the Chinese Patent Office on June 22, 2020 and entitled "Signal Transmission Method and Device", which is hereby incorporated by reference in its entirety.

### Field of Invention

The present application relates to the field of wireless communication technologies, and in particular, to a signal transmission method and device.

### Background

At present, the New Radio (NR) R16 protocol supports multiple levels of configurations of Discontinuous Reception (DRX) cycle, including cell-level configuration and terminal-level configuration. The cell level mainly considers paging initiated by possible terminals within the cell coverage, and the terminal level mainly considers the service characteristics of terminals to configure the DRX cycle. When the paging occasion of a paging signal is actually calculated, the calculation is performed according to the DRX with the shortest cycle in multiple levels. For a terminal with a longer DRX cycle configured by service characteristics, the power consumption caused by useless monitoring is increased.

### Summary

The embodiments of the present application provide a signal transmission method and device, so as to reduce the power consumption of a monitoring signal of a terminal.

In a first aspect, a signal transmission method is provided, including:
determining a third monitoring configuration information set of a first signal, wherein monitoring occasions corresponding to the third monitoring configuration information set are not more than monitoring occasions corresponding to at least one of a first monitoring configuration information set or a second monitoring configuration information set; wherein the first monitoring configuration information set is a network-level monitoring configuration information set of the first signal, and the second monitoring configuration information set is a node-level monitoring configuration information set of the first signal; and
monitoring the first signal according to the third monitoring configuration information set.

In some embodiments of the present application, determining the third monitoring configuration information set of the first signal, includes:
obtaining at least one of the first monitoring configuration information set or the second monitoring configuration information set of the first signal, and determining the third monitoring configuration information set of the first signal according to at least one of the first monitoring configuration information set or the second monitoring configuration information set; or
determining the third monitoring configuration information set of the first signal according to high-layer signaling or a predefined rule.

In some embodiments of the present application, a value of at least one monitoring configuration information in the third monitoring configuration information set is greater than or equal to a maximum value of corresponding monitoring configuration information in the first monitoring configuration information set and the second monitoring configuration information set;
wherein the monitoring configuration information includes at least one of: a monitoring threshold, a monitoring cycle, the number of monitoring frames in a monitoring cycle, the number of monitoring occasions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources.

In some embodiments of the present application, a value of at least one monitoring configuration information in the third monitoring configuration information set is less than or equal to a minimum value of corresponding monitoring configuration information in the first monitoring configuration information set and the second monitoring configuration information set;
wherein the monitoring configuration information includes at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources.

In some embodiments of the present application, determining the third monitoring configuration information set of the first signal according to at least one of the first monitoring configuration information set or the second monitoring configuration information set, includes:
obtaining transmission statistic data of the first signal; and
determining a value of at least one monitoring configuration information in the third monitoring configuration information set according to the transmission statistic data and at least one of the first monitoring configuration information set or the second monitoring configuration information set.

In some embodiments of the present application, determining the value of at least one monitoring configuration information in the third monitoring configuration information set according to the transmission statistic data and at least one of the first monitoring configuration information set or the second monitoring configuration information set, includes:
in a case that a probability of a network side device to send the first signal or a probability of a node device to receive the first signal is less than a first probability threshold, setting the value of at least one monitoring configuration information in the third monitoring configuration information set to be greater than or equal to a maximum value of corresponding monitoring configuration information in the first monitoring configuration information set and the second monitoring configuration information set;
in a case that the probability of the network side device to send the first signal or the probability of the node device to receive the first signal is greater than or equal to a second probability threshold, setting the value of at least one monitoring configuration information in the third monitoring configuration information set to be less than or equal to a minimum value of corresponding monitoring configuration information in the first monitoring configuration information set and the second monitoring configuration information set;
wherein the monitoring configuration information includes at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; and the first probability threshold is less than the second probability threshold.

In some embodiments of the present application, determining the value of at least one monitoring configuration information in the third monitoring configuration information set according to the transmission statistic data and at least one of the first monitoring configuration information set or the second monitoring configuration information set, includes:
in a case that a probability of a network side device to not send the first signal or a probability of a node device to not receive the first signal is less than a third probability threshold, setting the value of at least one monitoring configuration information in the third monitoring configuration information set to be less than or equal to a minimum value of corresponding monitoring configuration information in the first monitoring configuration information set and the second monitoring configuration information set;
in a case that the probability of the network side device to not send the first signal or the probability of the node device to not receive the first signal is greater than or equal to a fourth probability threshold, setting the value of at least one monitoring configuration information in the third monitoring configuration information set to be greater than or equal to a maximum value of corresponding monitoring configuration information in the first monitoring configuration information set and the second monitoring configuration information set;
wherein the monitoring configuration information includes at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; and the third probability threshold is less than the fourth probability threshold.

In some embodiments of the present application, determining the value of at least one monitoring configuration information in the third monitoring configuration information set according to the transmission statistic data and at least one of the first monitoring configuration information set or the second monitoring configuration information set, includes:
in a case that the number of times a network side device sends the first signal continuously or the number of times a node device receives the first signal continuously is less than a first cumulative number of times threshold, setting the value of at least one monitoring configuration information in the third monitoring configuration information set to be greater than or equal to a maximum value of corresponding monitoring configuration information in the first monitoring configuration information set and the second monitoring configuration information set;
in a case that the number of times the network side device sends the first signal continuously or the number of times the node device receives the first signal continuously is greater than or equal to a second cumulative number of times threshold, setting the value of at least one monitoring configuration information in the third monitoring configuration information set to be less than or equal to a minimum value of corresponding monitoring configuration information in the first monitoring configuration information set and the second monitoring configuration information set;
wherein the monitoring configuration information includes at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; and the first cumulative number of times threshold is less than the second cumulative number of times threshold.

In some embodiments of the present application, determining the value of at least one monitoring configuration information in the third monitoring configuration information set according to the transmission statistic data and at least one of the first monitoring configuration information set or the second monitoring configuration information set, includes:
in a case that the number of times a network side device sends the first signal discontinuously or the number of times a node device receives the first signal discontinuously is less than a third cumulative number of times threshold, setting the value of at least one monitoring configuration information in the third monitoring configuration information set to be less than or equal to a minimum value of corresponding monitoring configuration information in the first monitoring configuration information set and the second monitoring configuration information set;
in a case that the number of times the network side device sends the first signal discontinuously or the number of times the node device receives the first signal discontinuously is greater than or equal to a fourth cumulative number of times threshold, setting the value of at least one monitoring configuration information in the third monitoring configuration information set to be greater than or equal to a maximum value of corresponding monitoring configuration information in the first monitoring configuration information set and the second monitoring configuration information set;
wherein the monitoring configuration information includes at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; and the third cumulative number of times threshold is less than the fourth cumulative number of times threshold.

In some embodiments of the present application, the method further includes:
obtaining transmission statistic data of the first signal; and
adjusting a value of monitoring configuration information in the third monitoring configuration information set of the first signal according to the transmission statistic data of the first signal.

In some embodiments of the present application, adjusting the value of monitoring configuration information in the third monitoring configuration information set of the first signal according to the transmission statistic data of the first signal, includes:
in a case that a probability of a network side device to send the first signal or a probability of a node device to receive the first signal is less than a fifth probability threshold, increasing a value of at least one monitoring configuration information in the third monitoring configuration information set by a factor of M;
in a case that the probability of the network side device to send the first signal or the probability of the node device to receive the first signal is greater than or equal to a sixth probability threshold, decreasing a value of at least one monitoring configuration information in the third monitoring configuration information set by a factor of N;
wherein the monitoring configuration information includes at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; the fifth probability threshold is less than the sixth probability threshold, and both M and N are real numbers greater than or equal to 1.

In some embodiments of the present application, adjusting the value of monitoring configuration information in the third monitoring configuration information set of the first signal according to the transmission statistic data of the first signal, includes:
in a case that a probability of a network side device to not send the first signal or a probability of a node device to not receive the first signal is less than a seventh probability threshold, decreasing a value of at least one monitoring configuration information in the third monitoring configuration information set by a factor of P;
in a case that the probability of the network side device to not send the first signal or the probability of the node device to not receive the first signal is greater than or equal to an eighth probability threshold, increasing a value of at least one monitoring configuration information in the third monitoring configuration information set by a factor of Q;
wherein the monitoring configuration information includes at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; the seventh probability threshold is less than the eighth probability threshold, and both P and Q are real numbers greater than or equal to 1.

In some embodiments of the present application, adjusting the value of monitoring configuration information in the third monitoring configuration information set of the first signal according to the transmission statistic data of the first signal, includes:
in a case that the number of times a network side device sends the first signal continuously or the number of times a node device receives the first signal continuously is less than a fifth cumulative number of times threshold, increasing a value of at least one monitoring configuration information in the third monitoring configuration information set by a factor of X;
in a case that a probability of the network side device to send the first signal continuously or a probability of the node device to receive the first signal continuously is greater than or equal to a sixth cumulative number of times threshold, decreasing a value of at least one monitoring configuration information in the third monitoring configuration information set by a factor of Y;
wherein the monitoring configuration information includes at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; the fifth cumulative number of times threshold is less than the sixth cumulative number of times threshold, and both X and Y are real numbers greater than or equal to 1.

In some embodiments of the present application, adjusting the value of monitoring configuration information in the third monitoring configuration information set of the first signal according to the transmission statistic data of the first signal, includes:
in a case that the number of times a network side device sends the first signal discontinuously or the number of times a node device receives the first signal discontinuously is less than a seventh cumulative number of times threshold, decreasing a value of at least one monitoring configuration information in the third monitoring configuration information set by a factor of K;
in a case that a probability of the network side device to send the first signal discontinuously or a probability of the node device to receive the first signal discontinuously is greater than or equal to an eighth cumulative number of times threshold, increasing a value of at least one monitoring configuration information in the third monitoring configuration information set by a factor of L;
wherein the monitoring configuration information includes at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; the seventh cumulative number of times threshold is less than the eighth cumulative number of times threshold, and both K and L are real numbers greater than or equal to 1.

In some embodiments of the present application, the first signal includes at least one of a paging signal, a wake-up signal or a short message.

In a second aspect, the present application provides a signal transmission method, including:
determining a third monitoring configuration information set of a first signal, wherein monitoring occasions corresponding to the third monitoring configuration information set are not more than monitoring occasions corresponding to at least one of a first monitoring configuration information set or a second monitoring configuration information set; wherein the first monitoring configuration information set is a network-level monitoring configuration information set of the first signal, and the second monitoring configuration information set is a node-level monitoring configuration information set of the first signal; and
notifying a terminal of the third monitoring configuration information set of the first signal.

In some embodiments of the present application, determining the third monitoring configuration information set of the first signal, includes:
determining the third monitoring configuration information set of the first signal according to at least one of the first monitoring configuration information set or the second monitoring configuration information set of the first signal; or
determining the third monitoring configuration information set of the first signal according to high-layer signaling or a predefined rule.

In some embodiments of the present application, a value of at least one monitoring configuration information in the third monitoring configuration information set is greater than or equal to a maximum value of corresponding monitoring configuration information in the first monitoring configuration information set and the second monitoring configuration information set;
wherein the monitoring configuration information includes at least one of: a monitoring threshold, a monitoring cycle, the number of monitoring frames in a monitoring cycle, the number of monitoring occasions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources.

In some embodiments of the present application, a value of at least one monitoring configuration information in the third monitoring configuration information set is less than or equal to a minimum value of corresponding monitoring configuration information in the first monitoring configuration information set and the second monitoring configuration information set;
wherein the monitoring configuration information includes at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources.

In some embodiments of the present application, determining a value of at least one monitoring configuration information in the third monitoring configuration information set of the first signal according to at least one of the first monitoring configuration information set or the second monitoring configuration information set of the first signal, includes:
obtaining transmission statistic data of the first signal; and
determining the third monitoring configuration information set according to the transmission statistic data and at least one of the first monitoring configuration information set or the second monitoring configuration information set.

In some embodiments of the present application, determining a value of at least one monitoring configuration information in the third monitoring configuration information set according to the transmission statistic data and at least one of the first monitoring configuration information set or the second monitoring configuration information set, includes:
in a case that a probability of a network side device to send the first signal or a probability of a node device to receive the first signal is less than a first probability threshold, setting the value of at least one monitoring configuration information in the third monitoring configuration information set to be greater than or equal to a maximum value of corresponding monitoring configuration information in the first monitoring configuration information set and the second monitoring configuration information set;
in a case that the probability of the network side device to send the first signal or the probability of the node device to receive the first signal is greater than or equal to a second probability threshold, setting the value of at least one monitoring configuration information in the third monitoring configuration information set to be less than or equal to a minimum value of corresponding monitoring configuration information in the first monitoring configuration information set and the second monitoring configuration information set;
wherein the monitoring configuration information includes at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; and the first probability threshold is less than the second probability threshold.

In some embodiments of the present application, determining a value of at least one monitoring configuration information in the third monitoring configuration information set according to the transmission statistic data and at least one of the first monitoring configuration information set or the second monitoring configuration information set, includes:
in a case that a probability of a network side device to not send the first signal or a probability of a node device to not receive the first signal is less than a third probability threshold, setting the value of at least one monitoring configuration information in the third monitoring configuration information set to be less than or equal to a minimum value of corresponding monitoring configuration information in the first monitoring configuration information set and the second monitoring configuration information set;
in a case that the probability of the network side device to not send the first signal or the probability of the node device to not receive the first signal is greater than or equal to a fourth probability threshold, setting the value of at least one monitoring configuration information in the third monitoring configuration information set to be greater than or equal to a maximum value of corresponding monitoring configuration information in the first monitoring configuration information set and the second monitoring configuration information set;
wherein the monitoring configuration information includes at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; and the third probability threshold is less than the fourth probability threshold.

In some embodiments of the present application, determining a value of at least one monitoring configuration information in the third monitoring configuration information set according to the transmission statistic data and at least one of the first monitoring configuration information set or the second monitoring configuration information set, includes:
in a case that the number of times a network side device sends the first signal continuously or the number of times a node device receives the first signal continuously is less than a first cumulative number of times threshold, setting the value of at least one monitoring configuration information in the third monitoring configuration information set to be greater than or equal to a maximum value of corresponding monitoring configuration information in the first monitoring configuration information set and the second monitoring configuration information set;
in a case that the number of times the network side device sends the first signal continuously or the number of times the node device receives the first signal continuously is greater than or equal to a second cumulative number of times threshold, setting the value of at least one monitoring configuration information in the third monitoring configuration information set to be less than or equal to a minimum value of corresponding monitoring configuration information in the first monitoring configuration information set and the second monitoring configuration information set;
wherein the monitoring configuration information includes at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; and the first cumulative number of times threshold is less than the second cumulative number of times threshold.

In some embodiments of the present application, determining a value of at least one monitoring configuration information in the third monitoring configuration information set according to the transmission statistic data and at least one of the first monitoring configuration information set or the second monitoring configuration information set, includes:
in a case that the number of times a network side device sends the first signal discontinuously or the number of times a node device receives the first signal discontinuously is less than a third cumulative number of times threshold, setting the value of at least one monitoring configuration information in the third monitoring configuration information set to be less than or equal to a minimum value of corresponding monitoring configuration information in the first monitoring configuration information set and the second monitoring configuration information set;
in a case that the number of times the network side device sends the first signal discontinuously or the number of times the node device receives the first signal discontinuously is greater than or equal to a fourth cumulative number of times threshold, setting the value of at least one monitoring configuration information in the third monitoring configuration information set to be greater than or equal to a maximum value of corresponding monitoring configuration information in the first monitoring configuration information set and the second monitoring configuration information set;
wherein the monitoring configuration information includes at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; and the third cumulative number of times threshold is less than the fourth cumulative number of times threshold.

In some embodiments of the present application, the method further includes:
obtaining transmission statistic data of the first signal; and
adjusting a value of monitoring configuration information in the third monitoring configuration information set of the first signal according to the transmission statistic data of the first signal.

In some embodiments of the present application, adjusting the value of monitoring configuration information in the third monitoring configuration information set of the first signal according to the transmission statistic data of the first signal, includes:
in a case that a probability of a network side device to send the first signal or a probability of a node device to receive the first signal is less than a fifth probability threshold, increasing a value of at least one monitoring configuration information in the third monitoring configuration information set by a factor of M;
in a case that the probability of the network side device to send the first signal or the probability of the node device to receive the first signal is greater than or equal to a sixth probability threshold, decreasing a value of at least one monitoring configuration information in the third monitoring configuration information set by a factor of N;
wherein the monitoring configuration information includes at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; the fifth probability threshold is less than the sixth probability threshold, and both M and N are real numbers greater than 1.

In some embodiments of the present application, adjusting the value of monitoring configuration information in the third monitoring configuration information set of the first signal according to the transmission statistic data of the first signal, includes:
in a case that a probability of a network side device to not send the first signal or a probability of a node device to not receive the first signal is less than a seventh probability threshold, decreasing a value of at least one monitoring configuration information in the third monitoring configuration information set by a factor of P;
in a case that the probability of the network side device to not send the first signal or the probability of the node device to not receive the first signal is greater than or equal to an eighth probability threshold, increasing a value of at least one monitoring configuration information in the third monitoring configuration information set by a factor of Q;
wherein the monitoring configuration information includes at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; the seventh probability threshold is less than the eighth probability threshold, and both P and Q are real numbers greater than 1.

In some embodiments of the present application, adjusting the value of monitoring configuration information in the third monitoring configuration information set of the first signal according to the transmission statistic data of the first signal, includes:
in a case that the number of times a network side device sends the first signal continuously or the number of times a node device receives the first signal continuously is less than a fifth cumulative number of times threshold, increasing a value of at least one monitoring configuration information in the third monitoring configuration information set by a factor of X;
in a case that a probability of the network side device to send the first signal continuously or a probability of the node device to receive the first signal continuously is greater than or equal to a sixth cumulative number of times threshold, decreasing a value of at least one monitoring configuration information in the third monitoring configuration information set by a factor of Y;
wherein the monitoring configuration information includes at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; the fifth cumulative number of times threshold is less than the sixth cumulative number of times threshold, and both X and Y are real numbers greater than 1.

In some embodiments of the present application, adjusting the value of monitoring configuration information in the third monitoring configuration information set of the first signal according to the transmission statistic data of the first signal to obtain the third monitoring configuration information set, includes:
in a case that the number of times a network side device sends the first signal discontinuously or the number of times a node device receives the first signal discontinuously is less than a seventh cumulative number of times threshold, decreasing a value of at least one monitoring configuration information in the third monitoring configuration information set by a factor of K;
in a case that a probability of the network side device to send the first signal discontinuously or a probability of the node device to receive the first signal discontinuously is greater than or equal to an eighth cumulative number of times threshold, increasing a value of at least one monitoring configuration information in the third monitoring configuration information set by a factor of L;
wherein the monitoring configuration information includes at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; the seventh cumulative number of times threshold is less than the eighth cumulative number of times threshold, and both K and L are real numbers greater than or equal to 1.

In some embodiments of the present application, the method further includes:
determining a fourth monitoring configuration information set of the first signal, wherein monitoring occasions corresponding to the fourth monitoring configuration information set are not fewer than monitoring occasions corresponding to at least one of the first monitoring configuration information set, the second monitoring configuration information set or the third monitoring configuration information set;
sending the first signal according to the fourth monitoring configuration information set of the first signal.

In some embodiments of the present application, determining the fourth monitoring configuration information set of the first signal, includes:
determining the fourth monitoring configuration information set of the first signal according to at least one of the first monitoring configuration information set, the second monitoring configuration information set or the third monitoring configuration information set of the first signal.

In some embodiments of the present application, a value of at least one monitoring configuration information in the fourth monitoring configuration information set is not greater than a minimum value of corresponding monitoring configuration information in the first monitoring configuration information set, the second monitoring configuration information set and the third monitoring configuration information set;
wherein the monitoring configuration information includes at least one of: a monitoring threshold, a monitoring cycle, the number of monitoring frames in a monitoring cycle, the number of monitoring occasions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources.

In some embodiments of the present application, a value of at least one monitoring configuration information in the fourth monitoring configuration information set is not less than a maximum value of corresponding monitoring configuration information in the first monitoring configuration information set, the second monitoring configuration information set and the third monitoring configuration information set;
wherein the monitoring configuration information includes at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources.

In some embodiments of the present application, determining the fourth monitoring configuration information set of the first signal according to at least one of the first monitoring configuration information set, the second monitoring configuration information set or the third monitoring configuration information set of the first signal, includes:
obtaining transmission statistic data of the first signal; and
determining a value of at least one monitoring configuration information in the fourth monitoring configuration information set according to the transmission statistic data and at least one of the first monitoring configuration information set, the second monitoring configuration information set or the third monitoring configuration information set.

In some embodiments of the present application, determining a value of at least one monitoring configuration information in the fourth monitoring configuration information set according to the transmission statistic data and at least one of the first monitoring configuration information set, the second monitoring configuration information set or the third monitoring configuration information set, includes:
in a case that a probability of a network side device to send the first signal or a probability of a node device to receive the first signal is less than a ninth probability threshold, setting the value of at least one monitoring configuration information in the fourth monitoring configuration information set to be less than or equal to a minimum value of corresponding monitoring configuration information in the first monitoring configuration information set, the second monitoring configuration information set and the third monitoring configuration information set;
in a case that the probability of the network side device to send the first signal or the probability of the node device to receive the first signal is greater than or equal to a tenth probability threshold, setting the value of at least one monitoring configuration information in the fourth monitoring configuration information set to be greater than or equal to a maximum value of corresponding monitoring configuration information in the first monitoring configuration information set, the second monitoring configuration information set and the third monitoring configuration information set;
wherein the monitoring configuration information includes at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; and the ninth probability threshold is less than the tenth probability threshold.

In some embodiments of the present application, determining a value of at least one monitoring configuration information in the fourth monitoring configuration information set according to the transmission statistic data and at least one of the first monitoring configuration information set, the second monitoring configuration information set or the third monitoring configuration information set, includes:
in a case that a probability of a network side device to not send the first signal or a probability of a node device to not receive the first signal is less than an eleventh probability threshold, setting the value of at least one monitoring configuration information in the fourth monitoring configuration information set to be greater than or equal to a maximum value of corresponding monitoring configuration information in the first monitoring configuration information set, the second monitoring configuration information set and the third monitoring configuration information set;
in a case that the probability of the network side device to not send the first signal or the probability of the node device to not receive the first signal is greater than or equal to a twelfth probability threshold, setting the value of at least one monitoring configuration information in the fourth monitoring configuration information set to be less than or equal to a minimum value of corresponding monitoring configuration information in the first monitoring configuration information set, the second monitoring configuration information set and the third monitoring configuration information set;
wherein the monitoring configuration information includes at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; and the eleventh probability threshold is less than the twelfth probability threshold.

In some embodiments of the present application, determining a value of at least one monitoring configuration information in the fourth monitoring configuration information set according to the transmission statistic data and at least one of the first monitoring configuration information set, the second monitoring configuration information set or the third monitoring configuration information set, includes:
in a case that the number of times a network side device sends the first signal continuously or the number of times a node device receives the first signal continuously is less than a ninth cumulative number of times threshold, setting the value of at least one monitoring configuration information in the fourth monitoring configuration information set to be less than or equal to a minimum value of corresponding monitoring configuration information in the first monitoring configuration information set, the second monitoring configuration information set and the third monitoring configuration information set;
in a case that the number of times the network side device sends the first signal continuously or the number of times the node device receives the first signal continuously is greater than or equal to a tenth cumulative number of times threshold, setting the value of at least one monitoring configuration information in the fourth monitoring configuration information set to be greater than or equal to a maximum value of corresponding monitoring configuration information in the first monitoring configuration information set, the second monitoring configuration information set and the third monitoring configuration information set;
wherein the monitoring configuration information includes at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; and the ninth cumulative number of times threshold is less than the tenth cumulative number of times threshold.

In some embodiments of the present application, determining a value of at least one monitoring configuration information in the fourth monitoring configuration information set according to the transmission statistic data and at least one of the first monitoring configuration information set, the second monitoring configuration information set or the third monitoring configuration information set, includes:
in a case that the number of times a network side device sends the first signal discontinuously or the number of times a node device receives the first signal discontinuously is less than an eleventh cumulative number of times threshold, setting the value of at least one monitoring configuration information in the fourth monitoring configuration information set to be greater than or equal to a maximum value of corresponding monitoring configuration information in the first monitoring configuration information set, the second monitoring configuration information set and the third monitoring configuration information set;
in a case that the number of times the network side device sends the first signal discontinuously or the number of times the node device receives the first signal discontinuously is greater than or equal to a twelfth cumulative number of times threshold, setting the value of at least one monitoring configuration information in the fourth monitoring configuration information set to be less than or equal to a minimum value of corresponding monitoring configuration information in the first monitoring configuration information set, the second monitoring configuration information set and the third monitoring configuration information set;
wherein the monitoring configuration information includes at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; and the eleventh cumulative number of times threshold is less than the twelfth cumulative number of times threshold.

In some embodiments of the present application, the method further includes:
obtaining transmission statistic data of the first signal; and
adjusting a value of monitoring configuration information in the fourth monitoring configuration information set of the first signal according to the transmission statistic data of the first signal.

In some embodiments of the present application, adjusting a value of monitoring configuration information in the fourth monitoring configuration information set of the first signal according to the transmission statistic data of the first signal, includes:
in a case that a probability of a network side device to send the first signal or a probability of a node device to receive the first signal is less than a thirteenth probability threshold, decreasing a value of at least one monitoring configuration information in the fourth monitoring configuration information set by a factor of N;
in a case that the probability of the network side device to send the first signal or the probability of the node device to receive the first signal is greater than or equal to a fourteenth probability threshold, increasing a value of at least one monitoring configuration information in the fourth monitoring configuration information set by a factor of M;
wherein the monitoring configuration information includes at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; the thirteenth probability threshold is less than the fourteenth probability threshold, and both M and N are real numbers greater than 1.

In some embodiments of the present application, adjusting a value of monitoring configuration information in the fourth monitoring configuration information set of the first signal according to the transmission statistic data of the first signal, includes:
in a case that a probability of a network side device to not send the first signal or a probability of a node device to not receive the first signal is less than a fifteenth probability threshold, increasing a value of at least one monitoring configuration information in the fourth monitoring configuration information set by a factor of Q;
in a case that the probability of the network side device to not send the first signal or the probability of the node device to not receive the first signal is greater than or equal to a sixteenth probability threshold, decreasing a value of at least one monitoring configuration information in the fourth monitoring configuration information set by a factor of P;
wherein the monitoring configuration information includes at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; the fifteenth probability threshold is less than the sixteenth probability threshold, and both P and Q are real numbers greater than 1.

In some embodiments of the present application, adjusting a value of monitoring configuration information in the fourth monitoring configuration information set of the first signal according to the transmission statistic data of the first signal, includes:
in a case that the number of times a network side device sends the first signal continuously or the number of times a node device receives the first signal continuously is less than a thirteenth cumulative number of times threshold, decreasing a value of at least one monitoring configuration information in the fourth monitoring configuration information set by a factor of Y;
in a case that a probability of the network side device to send the first signal continuously or a probability of the node device to receive the first signal continuously is greater than or equal to a fourteenth cumulative number of times threshold, increasing a value of at least one monitoring configuration information in the fourth monitoring configuration information set by a factor of X;
wherein the monitoring configuration information includes at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; the thirteenth cumulative number of times threshold is less than the fourteenth cumulative number of times threshold, and both X and Y are real numbers greater than 1.

In some embodiments of the present application, adjusting a value of monitoring configuration information in the fourth monitoring configuration information set of the first signal according to the transmission statistic data of the first signal, includes:
in a case that the number of times a network side device sends the first signal discontinuously or the number of times a node device receives the first signal discontinuously is less than a fifteenth cumulative number of times threshold, increasing a value of at least one monitoring configuration information in the fourth monitoring configuration information set by a factor of L;
in a case that a probability of the network side device to send the first signal discontinuously or a probability of the node device to receive the first signal discontinuously is greater than or equal to a sixteenth cumulative number of times threshold, decreasing a value of at least one monitoring configuration information in the fourth monitoring configuration information set by a factor of K;
wherein the monitoring configuration information includes at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; the fifteenth cumulative number of times threshold is less than the sixteenth cumulative number of times threshold, and both K and L are real numbers greater than 1.

In some embodiments of the present application, the first signal includes at least one of a paging signal, a wake-up signal or a short message.

In a third aspect, the present application provides a node device, including a processor, a memory and a transceiver;
the transceiver is configured to receive and send data under control of the processor;
the memory is configured to store computer instructions;
the processor is configured to read the computer instructions to perform following operations:
   determining a third monitoring configuration information set of a first signal, wherein monitoring occasions corresponding to the third monitoring configuration information set are not more than monitoring occasions corresponding to at least one of a first monitoring configuration information set or a second monitoring configuration information set; wherein the first monitoring configuration information set is a network-level monitoring configuration information set of the first signal, and the second monitoring configuration information set is a node-level monitoring configuration information set of the first signal; and
   monitoring the first signal according to the third monitoring configuration information set.

In a fourth aspect, the present application provides a network side device, including a processor, a memory and a transceiver;
the transceiver is configured to receive and send data under control of the processor;
the memory is configured to store computer instructions;
the processor is configured to read the computer instructions to perform following operations:
   determining a third monitoring configuration information set of a first signal, wherein monitoring occasions corresponding to the third monitoring configuration information set are not more than monitoring occasions corresponding to at least one of a first monitoring configuration information set or a second monitoring configuration information set; wherein the first monitoring configuration information set is a network-level monitoring configuration information set of the first signal, and the second monitoring configuration information set is a node-level monitoring configuration information set of the first signal; and
   notifying a terminal of the third monitoring configuration information set of the first signal.

In a fifth aspect, the present application provides a node device, including:
a processing module, configured to determine a third monitoring configuration information set of a first signal, wherein monitoring occasions corresponding to the third monitoring configuration information set are not more than monitoring occasions corresponding to at least one of a first monitoring configuration information set or a second monitoring configuration information set; wherein the first monitoring configuration information set is a network-level monitoring configuration information set of the first signal, and the second monitoring configuration information set is a node-level monitoring configuration information set of the first signal; and
a monitoring module, configured to monitor the first signal according to the third monitoring configuration information set.

In a sixth aspect, the present application provides a network side device, including:
a processing module, configured to determine a third monitoring configuration information set of a first signal, wherein monitoring occasions corresponding to the third monitoring configuration information set are not more than monitoring occasions corresponding to at least one of a first monitoring configuration information set or a second monitoring configuration information set; wherein the first monitoring configuration information set is a network-level monitoring configuration information set of the first signal, and the second monitoring configuration information set is a node-level monitoring configuration information set of the first signal; and
a sending module, configured to notify a node device of the third monitoring configuration information set of the first signal.

In a seventh aspect, the present application provides a computer readable storage medium storing computer-executable instructions which are configured to cause a computer to perform the method according to any embodiment in the first aspect.

In an eighth aspect, the present application provides a computer readable storage medium storing computer-executable instructions which are configured to cause a computer to perform the method according to any embodiment in the second aspect.

In the above embodiments of the present application, the terminal determines the third monitoring configuration information set of the first signal, and monitors the first signal according to the third monitoring configuration information set, wherein the first monitoring configuration information set is a network-level monitoring configuration information set of the first signal, the second monitoring configuration information set is a node-level monitoring configuration information set of the first signal, and the monitoring occasions corresponding to the third monitoring configuration information set are not more than the monitoring occasions corresponding to at least one of the first monitoring configuration information set or the second monitoring configuration information set, thereby reducing the number of times the terminal wakes up to monitor the first signal, and thus reducing the power consumption of the terminal.

### Brief Description of the Drawings

In order to illustrate the technical solutions in the embodiments of the present application more clearly, the accompanying figures which need to be used in the embodiments of the present application will be introduced below briefly. Obviously the accompanying figures introduced below are only some embodiments of the present application, and other accompanying figures can also be obtained by those ordinary skilled in the art according to these accompanying figures without creative labor.
FIG. 1 exemplarily shows a schematic diagram of a monitoring pattern of a paging signal in the R16 standard.
FIG. 2 exemplarily shows a schematic diagram of a signal transmission process implemented on the terminal side according to an embodiment of the present application.
FIG. 3 exemplarily shows a schematic diagram of a signal transmission process implemented on the base station side according to an embodiment of the present application.
FIG. 4 exemplarily shows a schematic diagram of a signal transmission process implemented on the base station side according to an embodiment of the present application.
FIG. 5 exemplarily shows a structural schematic diagram of a node device according to an embodiment of the present application.
FIG. 6 exemplarily shows a structural schematic diagram of a network side device according to an embodiment of the present application.
FIG. 7 exemplarily shows a structural schematic diagram of a node device according to another embodiment of the present application.
FIG. 8 exemplarily shows a structural schematic diagram of a network side device according to another embodiment of the present application.

### Detailed Description of the Embodiments

In order to make the objects, technical solutions and advantages of the present application clearer, the present application will be further illustrated below in details with reference to the accompanying figures. Obviously the described embodiments are merely a part of the embodiments of the present application but not all the embodiments. Based upon the embodiments of the present application, all of other embodiments obtained by those ordinary skilled in the art without creative work pertain to the protection scope of the present application.

The terms "first", "second", "third" and "fourth" are only used for distinguishing description, and cannot be construed to indicate or imply the relative importance or implicitly point out the number of technical features indicated. Therefore, the features defined with "first", "second", "third" or "fourth" may explicitly or implicitly include one or more features. In the description of the embodiments of the present application, "at least one" means one or more, unless otherwise specified.

In the following, some terms in the embodiments of the present application are explained so as to facilitate the understanding of those skilled in the art.
(1) In the embodiments of the present application, the nouns "network" and "system" are often used alternately, but those skilled in the art may understand the meaning thereof.
(2) The term "a plurality of" in the embodiments of the present application refers to two or more, and other quantifiers are similar thereto.
(3) "and/or" describes the association relationship of the associated objects, and indicates that there may be three relationships, for example, A and/or B may represent: only A, both A and B, and only B. The character "/" generally indicates that the associated objects have a kind of "or" relationship.
(4) Network side device is a device that provides the wireless communication function for the terminal, including but not limited to: gNB in 5G, Radio Network Controller (RNC), Node B (NB), Base Station Controller (BSC), Base Transceiver Station (BTS), home base station (for example, home evolved NodeB or Home Node B (HNB)), Base Band Unit (BBU), transmitting and receiving point (TRP), Transmitting Point (TP), mobile switching center, etc. The base station in the present application may also be a device that provides the wireless communication function for the terminal in other communication systems that may appear in the future. The embodiments of the present application are described by taking "base station" as an example.
(5) Terminal is a device that can provide users with voice and/or data connectivity. For example, the terminal device includes a handheld device with wireless connection function, a vehicle-mounted device, etc. At present, the terminal device may be: mobile phone, tablet, laptop, palmtop computer, Mobile Internet Device (MID), wearable device, Virtual Reality (VR) device, Augmented Reality (AR) device, wireless terminal in the industrial control, wireless terminal in the self driving, wireless terminal in the smart grid, wireless terminal in the transportation safety, wireless terminal in the smart city, or wireless terminal in the smart home, etc. In the embodiments of the present application, the terminal may also be referred to as node.

The base station needs to send a variety of signals to the terminal to implement different functions. For example, these signals may include a paging signal (Paging), a wake-up signal, a short message, and the like.

The current NR R16 standard defines monitoring of the paging signal in the Radio Resource Control-Idle (RRC-Idle) state and Radio Resource Control-Inative (RRC-Inactive) state. The terminal calculates the positions of the Paging Frame (PF) and the Paging Occasion (PO) according to the configuration information of the paging signal. At the PO moment, the terminal monitors the paging of the Downlink Control Information (DCI) scrambled based on the Paging Radio Network Template Identity (P-RNTI) in the paging Search Space (SS), and then obtains a Physical Downlink Shared Channel (PDSCH) that carries the paging signal, decodes the PDSCH and obtains a list of target terminals used to record the paging message. If the terminal is in the list, the paging signal carried by PDSCH is obtained, otherwise the paging signal is not obtained. Here, the P-RNTI is shared by all terminals.

When configuring the monitoring cycle of the paging signal, the base station configures the number of PFs in each cycle and the number of POs in each PF. At the same PO moment, there may be a plurality of terminals monitoring the paging signal. As long as the base station receives a paging request sent by one terminal, the base station will send the DCI scrambled based on the P-RNTI at the PO moment. At the PO moment, other terminals also need to wake up to monitor the DCI scrambled based on the P-RNTI. If the DCI scrambled by the P-RNTI is detected, the decoding operation is performed, including: the decoding of the Physical Downlink Control Channel (PDDCH) and the decoding of PDSCH, until the terminal is informed that it is not in the target terminal list of the paging message.

When the base station configures the paging message, the terminal may receive a cell-level DRX cycle configured by the base station or a terminal-level DRX cycle configured by the base station. Based on the current NR R16 standard, the terminal calculates PO according to the minimum value in the cell-level DRX cycle and the terminal-level DRX cycle. When the cell-level DRX cycle is less than the terminal-level DRX cycle, the terminal needs to monitor the paging signal according to the denser POs, so there is power consumption caused by monitoring useless paging signals.

Further, for a terminal, the probability of paging the terminal by the network side is usually low (it can be concluded, through the actual measurement, that the probability of a terminal to monitor a paging signal in all PO positions within one paging cycle is not higher than 10%), the terminal monitors no paging signal on most POs, so there is power consumption caused by monitoring more useless paging signals.

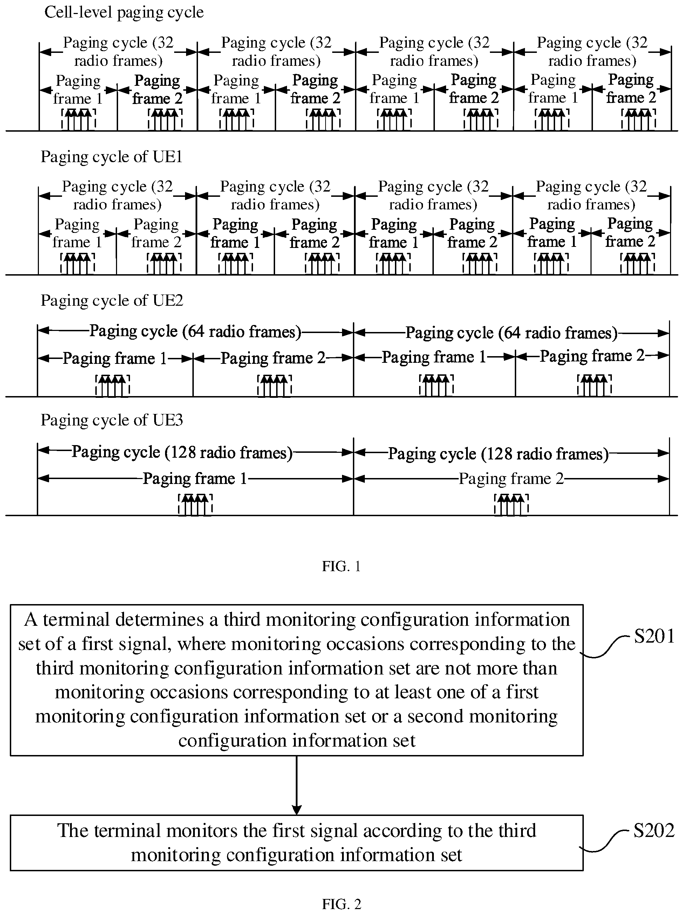

FIG. 1 exemplarily shows a schematic diagram of a monitoring pattern of a paging signal in the R16 standard, wherein the paging cycle is a type of DRX cycle, and the DRX cycle in the figure corresponds to the paging cycle of the paging signal.

As shown in the figure, the cell-level DRX cycle configured by the base station includes 32 Radio Frames (RFs), that is, the paging cycle is 32 milliseconds (ms). The terminal-level DRX cycle configured by the base station for UE1 is 32 radio frames, the terminal-level DRX cycle configured for UE2 is 64 radio frames, and the terminal-level DRX cycle configured for UE3 is 128 radio frames. Two PFs are configured in each DRX cycle, and four POs are configured in each PF. According to the NR R16 standard, all the DRX cycles calculated by the above three UEs (terminals) are the DRX cycle of 32 RFs, so that the monitoring patterns (patterns) of these three UEs are the same.

As shown in FIG. 1, for the UE2 and UE3, the POs in the monitoring pattern are denser than the POs in the DRX cycle of the UE2 and UE3, so that the UE2 and UE3 monitor the paging signal in the denser monitoring pattern, thereby increasing the power consumption of the terminal. Further, when the probability of the terminal being paged is low, monitoring the paging signal according to a denser monitoring pattern will further increase the power consumption of the terminal due to useless monitoring of the paging signal.

The above problem also exists in monitoring the wake-up signal, short message, etc.

In view of the above problem, the embodiments of the present application provide a signal transmission method. In this method, a terminal monitors a first signal according to a monitoring configuration information set with fewer monitoring occasions, thereby reducing the power consumption of the terminal. The embodiments of the present application may be applied to the signal configuration and transmission in the RRC idle state (RRC-Idle) and the RRC inactive state (RRC-Inactive).

The embodiments of the present application will be described in detail below with reference to the accompanying drawings.

FIG. 2 exemplarily shows a schematic diagram of a signal transmission process implemented on the terminal side according to an embodiment of the present application. As shown, the process may include the following operations.

S201: a terminal determines a third monitoring configuration information set of a first signal, where monitoring occasions corresponding to the third monitoring configuration information set are not more than monitoring occasions corresponding to at least one of a first monitoring configuration information set or a second monitoring configuration information set.

In the embodiments of the present application, the first signal includes at least one of a paging signal, a wake-up signal or a short message, and may also include other signals having the above-mentioned characteristics, which is not limited in the embodiments of the present application.

Here, the paging signal is used for paging of the terminal under the network, and includes at least one of a paging message or a system message. When a service or system message arrives, the base station needs to wake up the terminal (such as the terminal as the called party in the call service) through the paging signal. The wake-up signal may be used to wake up the terminal for signal and/or channel monitoring. The short message may be at least one of an SIB1 (System Information Block Type1) message or an early warning message.

In this step, the terminal obtains at least one of the first monitoring configuration information set or the second monitoring configuration information set of the first signal, that is, obtains the first monitoring configuration information set of the first signal, or obtains the second monitoring configuration information set, or obtains the first monitoring configuration information set and the second monitoring configuration information set. The third monitoring configuration information set of the first signal is determined according to at least one of the first monitoring configuration information set or the second monitoring configuration information set, wherein the monitoring occasions corresponding to the third monitoring configuration information set are not more than the monitoring occasions corresponding to at least one of the first monitoring configuration information set or the second monitoring configuration information set.

The above-mentioned first monitoring configuration information set and second monitoring configuration information set belong to monitoring configuration information sets of different levels, where the first monitoring configuration information set is a network-level (cell-level) monitoring configuration information set of the first signal, and the second monitoring configuration information set is a node-level (terminal-level) monitoring configuration information set of the first signal.

Here, the monitoring configuration information in the first monitoring configuration information set may include at least one of: a first monitoring cycle of the first signal, a first monitoring time offset value of the first signal, the first monitoring position of a first monitoring occasion of the first signal, the number of monitoring frames in the first monitoring cycle of the first signal, the number of monitoring occasions of the first signal in each monitoring frame, the number of first frequency domain resources of the first signal, a configuration offset value of the first frequency domain resources of the first signal, a first sequence configuration of the first signal, the number of first spatial domain resources of the first signal, a first monitoring threshold of the first signal, an offset value of the first monitoring threshold, the length of the continuous monitoring time corresponding to a monitoring occasion in the first monitoring frame, or the number of symbols corresponding to a monitoring occasion in the first monitoring frame.

The monitoring configuration information in the second monitoring configuration information set may include at least one of: a second monitoring cycle of the first signal, a second monitoring time offset value of the first signal, the first monitoring position of a second monitoring occasion of the first signal, the number of monitoring frames in the second monitoring cycle of the first signal, the number of monitoring occasions of the first signal in each monitoring frame, the number of second frequency domain resources of the first signal, a configuration offset value of the second frequency domain resources of the first signal, a second sequence configuration of the first signal, the number of second spatial domain resources of the first signal, a second monitoring threshold of the first signal, an offset value of the second monitoring threshold, the length of the continuous monitoring time corresponding to a monitoring occasion in the second monitoring frame, or the number of symbols corresponding to a monitoring occasion in the second monitoring frame.

The meaning of the monitoring configuration information in the first monitoring configuration information set and the second monitoring configuration information set is similar to that of the monitoring configuration information of the paging signal. For example, taking the first signal being a paging signal as an example, the number of monitoring frames in the first monitoring cycle in the first monitoring configuration information set is the number of PFs in the monitoring cycle of the paging signal in the network-level monitoring configuration information set; for another example, the number of monitoring occasions of the first signal in each monitoring frame in the first monitoring configuration information set is the number of POs in each PF of the paging signal in the network-level monitoring configuration information set.

The quantities of monitoring configuration information in the first monitoring configuration information set and the second monitoring configuration information set may be the same or different. The values of the same monitoring configuration information in the first monitoring configuration information set and the second monitoring configuration information set may be the same or different. For example, the values of the monitoring cycles in the first monitoring configuration information set and the second monitoring configuration information set are 32ms and 64ms respectively, and the numbers of monitoring frames in the first monitoring configuration information set and the second monitoring configuration information set are both 2.

The third monitoring configuration information set includes at least one of: a first monitoring cycle of the first signal, a third monitoring time offset value of the first signal, the first monitoring position of a third monitoring occasion of the first signal, the number of monitoring frames in the third monitoring cycle of the first signal, the number of monitoring occasions of the first signal in each monitoring frame, the number of third frequency domain resources of the first signal, a configuration offset value of the third frequency domain resources of the first signal, a third sequence configuration of the first signal, the number of third spatial domain resources of the first signal, a third monitoring threshold of the first signal, an offset value of the first monitoring threshold, the length of the continuous monitoring time corresponding to a monitoring occasion in the third monitoring frame, or the number of symbols corresponding to a monitoring occasion in the third monitoring frame.

The value of at least one monitoring configuration information in the third monitoring configuration information set may be set according to the value of the corresponding monitoring configuration information in the first monitoring configuration information set, or may be set according to the value of the corresponding monitoring configuration information in the second monitoring configuration information set. That is, all the monitoring configuration information in the third monitoring configuration information set may be set according to the corresponding monitoring configuration information in the first monitoring configuration information set; or all the monitoring configuration information in the third monitoring configuration information set may be set according to the corresponding monitoring configuration information in the second monitoring configuration information set; or a part of the third monitoring configuration information set is set according to the corresponding monitoring configuration information in the first monitoring configuration information set, and a part of the third monitoring configuration information set is set according to the corresponding monitoring configuration information in the second monitoring configuration information set.

In some embodiments, the first monitoring configuration information set of the first signal may be configured at the network side, for example, the base station notifies the terminal through at least one of broadcast message, system message, RRC signaling, dynamic signaling, or high-level signaling. The first monitoring configuration information set of the first signal may also be preset.

In some embodiments, the second monitoring configuration information set of the first signal may be configured at the network side, for example, the base station notifies the terminal through at least one of broadcast message, system message, RRC signaling, dynamic signaling, or high-level signaling. The second monitoring configuration information set of the first signal may also be preset.

In some embodiments, the third monitoring configuration information set of the first signal may be configured at the network side, for example, the base station notifies the terminal through at least one of broadcast message, system message, RRC signaling, dynamic signaling, or high-level signaling. The third monitoring configuration information set of the first signal may also be preset.

S202: the terminal monitors the first signal according to the third monitoring configuration information set.

In the above embodiments of the present application, the terminal determines the third monitoring configuration information set of the first signal, and monitors the first signal according to the third monitoring configuration information set, wherein the first monitoring configuration information set is a network-level monitoring configuration information set of the first signal, the second monitoring configuration information set is a node-level monitoring configuration information set of the first signal, and the monitoring occasions corresponding to the third monitoring configuration information set are not more than the monitoring occasions corresponding to at least one of the first monitoring configuration information set or the second monitoring configuration information set, thereby reducing the number of times the terminal wakes up to monitor the first signal, and thus reducing the power consumption of the terminal.

In some embodiments of the present application, a value of at least one monitoring configuration information in the third monitoring configuration information set is greater than or equal to a maximum value of corresponding monitoring configuration information in the first monitoring configuration information set and the second monitoring configuration information set. The monitoring configuration information includes at least one of: a monitoring threshold, a monitoring cycle, the number of monitoring frames in a monitoring cycle, the number of monitoring occasions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources. In a specific implementation, the monitoring configuration information may be at least one of a monitoring threshold or a monitoring cycle.

Taking the case of configuring the monitoring cycle in the third monitoring configuration information set as an example, the value of the monitoring cycle in the third monitoring configuration information set can be set to be the same as or an integral multiple of the maximum value of the monitoring cycles in the first monitoring configuration information set and the second monitoring configuration information set, so that the number of monitoring occasions of the first signal in the monitoring pattern of the first signal obtained according to the third monitoring configuration information set is not greater than the number of monitoring occasions in the monitoring patterns corresponding to the first monitoring configuration information set and the second monitoring configuration information set, thereby reducing the power consumption consumed by the terminal to monitor the first signal.

In some embodiments of the present application, after the value of at least one monitoring configuration information in the third monitoring configuration information set is set in the above manner, other monitoring configuration information in the third monitoring configuration information set may be set according to the corresponding monitoring configuration information in the monitoring configuration information set where the at least one monitoring configuration information is located.

For example, if the monitoring threshold in the third monitoring configuration information set is greater than or equal to the maximum of the monitoring thresholds in the first monitoring configuration information set and the second monitoring configuration information set, the value of other monitoring configuration information in the third monitoring configuration information set is the same as the value of the corresponding monitoring configuration information in the monitoring configuration information set where the maximum monitoring threshold is located, or may be the same as the value of the corresponding monitoring configuration information in the monitoring configuration information set where the minimum monitoring threshold is located.

For another example, if the monitoring cycle in the third monitoring configuration information set is greater than or equal to the maximum of the monitoring cycles in the first monitoring configuration information set and the second monitoring configuration information set, the value of other monitoring configuration information in the third monitoring configuration information set is the same as the value of the corresponding monitoring configuration information in the monitoring configuration information set where the maximum monitoring cycle is located, so that the number of monitoring occasions of the first signal in the third monitoring configuration information set is not greater than the number of monitoring occasions in the monitoring patterns corresponding to the first monitoring configuration information set and the second monitoring configuration information set, thereby reducing the power consumption consumed by the terminal to monitor the first signal.

In some embodiments of the present application, a value of at least one monitoring configuration information in the third monitoring configuration information set is less than or equal to a minimum value of corresponding monitoring configuration information in the first monitoring configuration information set and the second monitoring configuration information set. The monitoring configuration information includes at least one of: a monitoring threshold, a monitoring cycle, the number of monitoring frames in a monitoring cycle, the number of monitoring occasions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources. In a specific implementation, the monitoring configuration information may be at least one of: the number of monitoring frames in a monitoring cycle, the number of monitoring occasions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources.

Taking the case of configuring the number of monitoring frames in the third monitoring configuration information set as an example, the number of monitoring frames in the third monitoring configuration information set can be set to be the same as or a factor of the minimum of the numbers of monitoring frames in the first monitoring configuration information set and the second monitoring configuration information set, so that the number of monitoring occasions of the first signal in the monitoring pattern of the first signal obtained according to the third monitoring configuration information set is not greater than the number of monitoring occasions in the monitoring patterns corresponding to the first monitoring configuration information set and the second monitoring configuration information set, thereby reducing the power consumption consumed by the terminal to monitor the first signal.

In some embodiments of the present application, after determining that the value of at least one monitoring configuration information in the third monitoring configuration information set is less than or equal to the minimum value of the corresponding monitoring configuration information in the first monitoring configuration information set and the second monitoring configuration information set, the value of other monitoring configuration information in the third monitoring configuration information set may be determined according to the configuration information set where the at least one monitoring configuration information determined is located.

For example, if the number of monitoring frames in the third monitoring configuration information set is less than or equal to the minimum of the numbers of monitoring frames in the first monitoring configuration information set and the second monitoring configuration information set, the value of other monitoring configuration information in the third monitoring configuration information set is the same as the value of the corresponding monitoring configuration information in the monitoring configuration information set where the minimum number of monitoring frames is located.

For another example, if the number of monitoring occasions in the third monitoring configuration information set is less than or equal to the minimum of the numbers of monitoring occasions in the first monitoring configuration information set and the second monitoring configuration information set, the value of other monitoring configuration information in the third monitoring configuration information set is the same as the value of the corresponding monitoring configuration information in the monitoring configuration information set where the minimum number of monitoring occasions is located, so that the number of monitoring occasions of the first signal in the third monitoring configuration information set is not greater than the number of monitoring occasions in the monitoring patterns corresponding to the first monitoring configuration information set and the second monitoring configuration information set, thereby reducing the power consumption consumed by the terminal to monitor the first signal.

In embodiments of the present application, the monitoring configuration information sets have the same monitoring configuration information except monitoring threshold and monitoring cycle. If the monitoring threshold and/or the monitoring cycle is/are greater, the number of monitoring occasions in the monitoring configuration information set is less, and the times the terminal wakes up to monitor the signal are fewer, thereby saving more power. The monitoring configuration information sets have the same configuration parameters except the number of monitoring frames in a monitoring cycle, the number of monitoring occasions in a monitoring frame, the length of the continuous monitoring time corresponding to a monitoring occasion in a monitoring frame, the number of symbols corresponding to a monitoring occasion in a monitoring frame, the number of monitoring frequency domain resources and the number of monitoring spatial domain resources. If the number of monitoring frames in a monitoring cycle and/or the number of monitoring occasions in a monitoring frame and/or the length of the continuous monitoring time corresponding to a monitoring occasion in a monitoring frame and/or the number of symbols corresponding to a monitoring occasion in a monitoring frame and/or the number of monitoring frequency domain resources and/or the number of monitoring spatial domain resources is/are greater, the number of monitoring occasions in the monitoring configuration information set is less, and the times the terminal wakes up to monitor the signal are more, thereby consuming more power.

In embodiments of the present application, when the monitoring occasions corresponding to the third monitoring configuration information set are calculated, the influence of each monitoring configuration information on the number of monitoring occasions in the third monitoring configuration information set may be comprehensively considered, so that the number of monitoring occasions of the first signal in the third monitoring configuration information set is not greater than the number of monitoring occasions in the monitoring pattern corresponding to the first monitoring configuration information set and the second monitoring configuration information set, thereby reducing the power consumption consumed by the terminal to monitor the first signal.

For example, the first monitoring cycle of the first monitoring configuration information set is 320ms, the second monitoring cycle of the second monitoring configuration information set is 640ms, and the third monitoring cycle of the third monitoring configuration information set may be configured as 320ms, so that the number of monitoring occasions of the first signal in the third monitoring configuration information set is not greater than the number of monitoring occasions in the monitoring patterns corresponding to the first monitoring configuration information set and the second monitoring configuration information set, thereby reducing the power consumption consumed by the terminal to monitor the first signal.

For another example, the first monitoring cycle in the first monitoring configuration information set is 320 ms, the number of first monitoring frames is H1, the first monitoring cycle in the second monitoring configuration information set is 640 ms, and the number of first monitoring frames in the first monitoring configuration information set is H2, wherein H1<H2. When the third monitoring cycle in the third monitoring configuration information set is configured as 640ms and the number of third monitoring frames is configured as H2, even if the third monitoring cycle is greater than the first monitoring cycle, the number of third monitoring frames is less than the number of first monitoring frames, and the number of third monitoring occasions in the third monitoring configuration information set obtained after comprehensive calculation is not more than the number of monitoring occasions in the first monitoring configuration information set.

In some embodiments of the present application, the terminal may obtain the transmission statistic data of the first signal, and determine the value of at least one monitoring configuration information in the third monitoring configuration information set according to the transmission statistic data and at least one of the first monitoring configuration information set or the second monitoring configuration information set.

Wherein, the monitoring configuration information includes at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources.

Wherein, the transmission statistic data of the first signal may include at least one of: the probability of the base station to send the first signal, the probability of the terminal to receive the first signal, the probability of the base station to not send the first signal, the probability of the terminal to not receive the first signal, the number of times the base station sends the first signal continuously, the number of times the terminal receives the first signal continuously, the number of times the base station sends the first signal discontinuously, or the number of times the terminal receives the first signal discontinuously.

Wherein, the sending probability refers to the probability of the base station to send the first signal to a first terminal, and the receiving probability refers to the probability of the first terminal to receive the first signal sent by the base station. The number of times of continuous sending refers to the number of times the base station continuously sends the first signal to the first terminal, and the number of times of continuous receiving refers to the number of times the first terminal continuously receives the first signal sent by the base station.

The scheme of determining the value of at least one monitoring configuration information in the third monitoring configuration information set according to the transmission statistic data and at least one of the first monitoring configuration information set or the second monitoring configuration information set in the embodiments of the present application will be illustrated below by several examples.

Taking the transmission statistic data being the probability of the base station to send the first signal or the probability of the terminal to receive the first signal as an example, the terminal may use the following configuration method when configuring the third monitoring configuration information set.

The terminal obtains the probability of the base station to send the first signal or the probability of the terminal to receive the first signal, and compares the probability with a corresponding probability threshold. If it is determined that the probability of the base station to send the first signal or the probability of the terminal to receive the first signal is less than a first probability threshold, then the value of at least one monitoring configuration information in the third monitoring configuration information set is set to be greater than or equal to the maximum value of the corresponding monitoring configuration information in the first monitoring configuration information set and the second monitoring configuration information set; if it is determined that the probability of the base station to send the first signal or the probability of the terminal to receive the first signal is greater than or equal to a second probability threshold, then the value of at least one monitoring configuration information in the third monitoring configuration information set is set to be less than or equal to the minimum value of the corresponding monitoring configuration information in the first monitoring configuration information set and the second monitoring configuration information set, wherein the first probability threshold is less than the second probability threshold.

For example, the first probability threshold is 20%, the second probability threshold is 80%, the first monitoring cycle in the first monitoring configuration information set is 320ms, and the second monitoring cycle in the second monitoring configuration information set is 640ms. In a specific time window, if the probability of the base station to send the first signal obtained by the terminal is 90%, indicating that it is greater than the second probability threshold, then the third monitoring cycle in the third monitoring configuration information set is set to be the same as the value of the monitoring cycle in the first monitoring configuration information set, that is, 320ms; under the same condition, the third monitoring cycle in the third monitoring configuration information set may also be set to be less than the minimum of the first monitoring cycle and the second monitoring cycle, for example, the third monitoring cycle is set as 160ms. If the probability of the base station to send the first signal obtained by the terminal is 10%, indicating that it is less than the first probability threshold, then the third monitoring cycle in the third monitoring configuration information set is set as 640ms; under the same condition, the third monitoring cycle in the third monitoring configuration information set may also be set to be greater than the maximum of the first monitoring cycle and the second monitoring cycle, for example, the third monitoring cycle is set as 1280 ms.

Taking the transmission statistic data being the probability of the base station to not send the first signal or the probability of the terminal to not receive the first signal as an example, the terminal may use the following configuration method when configuring the third monitoring configuration information set.

The terminal obtains the probability of the base station to not send the first signal or the probability of the terminal to not receive the first signal, and compares the probability with a corresponding probability threshold. If it is determined that the probability of the base station to not send the first signal or the probability of the terminal to not receive the first signal is less than a third probability threshold, then the value of at least one monitoring configuration information in the third monitoring configuration information set is set to be less than or equal to the minimum value of the corresponding monitoring configuration information in the first monitoring configuration information set and the second monitoring configuration information set; if it is determined that the probability of the base station to not send the first signal or the probability of the terminal to not receive the first signal is greater than or equal to a fourth probability threshold, then the value of at least one monitoring configuration information in the third monitoring configuration information set is set to be greater than or equal to the maximum value of the corresponding monitoring configuration information in the first monitoring configuration information set and the second monitoring configuration information set, wherein the third probability threshold is less than the fourth probability threshold.

Taking the transmission statistic data being the number of times the base station sends the first signal continuously or the number of times the terminal receives the first signal continuously as an example, the terminal may use the following configuration method when configuring the third monitoring configuration information set.

The terminal obtains the number of times the base station sends the first signal continuously or the number of times the terminal receives the first signal continuously, and compares the number of times with a corresponding cumulative number of times threshold. If it is determined that the number of times the base station sends the first signal continuously or the number of times the terminal receives the first signal continuously is less than a first cumulative number of times threshold, then the value of at least one monitoring configuration information in the third monitoring configuration information set is set to be greater than or equal to the maximum value of the corresponding monitoring configuration information in the first monitoring configuration information set and the second monitoring configuration information set; if it is determined that the number of times the base station sends the first signal continuously or the number of times the terminal receives the first signal continuously is greater than or equal to a second cumulative number of times threshold, then the value of at least one monitoring configuration information in the third monitoring configuration information set is set to be less than or equal to the minimum value of the corresponding monitoring configuration information in the first monitoring configuration information set and the second monitoring configuration information set, wherein the first cumulative number of times threshold is less than the second cumulative number of times threshold.

For example, the first monitoring cycle in the first monitoring configuration information set is 320ms, the second monitoring cycle in the second monitoring configuration information set is 640ms, the first cumulative number of times threshold is e, the second cumulative number of times threshold is f, and e<f. In a specific time window, if the number of times the base station sends the first signal continuously obtained by the terminal is u and u<e, then the third monitoring cycle in the third monitoring configuration information set is set as 640ms; under the same condition, the third monitoring cycle in the third monitoring configuration information set may also be set to be greater than the maximum of the first monitoring cycle and the second monitoring cycle, for example, the third monitoring cycle is set as 1280ms. If the number of times the base station sends the first signal continuously obtained by the terminal is u and u≥f, then the third monitoring cycle in the third monitoring configuration information set is set as 320ms; under the same condition, the third monitoring cycle in the third monitoring configuration information set may also be set to be less than the minimum of the first monitoring cycle and the second monitoring cycle, for example, the third monitoring cycle is set as 160ms.

Taking the transmission statistic data being the number of times the base station sends the first signal discontinuously or the number of times the terminal receives the first signal discontinuously as an example, the terminal may use the following configuration method when configuring the third monitoring configuration information set.

The terminal obtains the number of times the base station sends the first signal discontinuously or the number of times the terminal receives the first signal discontinuously, and compares the number of times with a corresponding cumulative number of times threshold. If it is determined that the number of times the base station sends the first signal discontinuously or the number of times the terminal receives the first signal discontinuously is less than a third cumulative number of times threshold, then the value of at least one monitoring configuration information in the third monitoring configuration information set is set to be less than or equal to the minimum value of the corresponding monitoring configuration information in the first monitoring configuration information set and the second monitoring configuration information set; if it is determined that the number of times the base station sends the first signal discontinuously or the number of times the terminal receives the first signal discontinuously is greater than or equal to a fourth cumulative number of times threshold, then the value of at least one monitoring configuration information in the third monitoring configuration information set is set to be greater than or equal to the maximum value of the corresponding monitoring configuration information in the first monitoring configuration information set and the second monitoring configuration information set, wherein the third cumulative number of times threshold is less than the fourth cumulative number of times threshold.

In some embodiments of the present application, the terminal may adjust the value of the monitoring configuration information in the third monitoring configuration information set according to the obtained transmission data of the first signal, wherein the monitoring configuration information in the third monitoring configuration information set includes at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources.

Taking the transmission statistic data being the probability of the base station to send the first signal or the probability of the terminal to receive the first signal as an example, the terminal may use the following configuration method when adjusting the value of the corresponding monitoring configuration information in the third monitoring configuration information set.

The terminal obtains the probability of the base station to send the first signal or the probability of the terminal to receive the first signal, and compares the probability with a corresponding probability threshold. If it is determined that the probability of the base station to send the first signal or the probability of the terminal to receive the first signal is less than a fifth probability threshold, then the value of at least one monitoring configuration information in the third monitoring configuration information set is increased by a factor of M; if it is determined that the probability of the base station to send the first signal or the probability of the terminal to receive the first signal is greater than or equal to a sixth probability threshold, then the value of at least one monitoring configuration information in the third monitoring configuration information set is decreased by a factor of N, wherein the fifth probability threshold is less than the sixth probability threshold, and both M and N are real numbers greater than or equal to 1.

For example, the value of the third monitoring cycle in the third monitoring configuration information set is 320 ms, the fifth probability threshold is 20%, and the sixth probability threshold is 80%. In a specific time window, if the probability of the base station to send the first signal obtained by the terminal is 90%, indicating that it is greater than the sixth probability threshold, the third monitoring cycle in the third monitoring configuration information set is decreased by a factor of 1 and is set as 160ms. If the probability of the base station to send the first signal obtained by the terminal is 10%, indicating that it is less than the fifth probability threshold, the third monitoring cycle in the third monitoring configuration information set is increased by a factor of 1 and is set as 640ms.

Taking the transmission statistic data being the probability of the base station to not send the first signal or the probability of the terminal to not receive the first signal as an example, the terminal may use the following configuration method when adjusting the value of the corresponding monitoring configuration information in the third monitoring configuration information set.

The terminal obtains the probability of the base station to not send the first signal or the probability of the terminal to not receive the first signal, and compares the probability with a corresponding probability threshold. If it is determined that the probability of the base station to not send the first signal or the probability of the terminal to not receive the first signal is less than a seventh probability threshold, then the value of at least one monitoring configuration information in the third monitoring configuration information set is decreased by a factor of P; if it is determined that the probability of the base station to not send the first signal or the probability of the terminal to not receive the first signal is greater than or equal to an eighth probability threshold, then the value of at least one monitoring configuration information in the third monitoring configuration information set is increased by a factor of Q, wherein the seventh probability threshold is less than the eighth probability threshold, and both P and Q are real numbers greater than or equal to 1.

Taking the transmission statistic data being the number of times the base station sends the first signal continuously or the number of times the terminal receives the first signal continuously as an example, the terminal may use the following configuration method when adjusting the value of the corresponding monitoring configuration information in the third monitoring configuration information set.

The terminal obtains the number of times the base station sends the first signal continuously or the number of times the terminal receives the first signal continuously, and compares the number of times with a corresponding cumulative number of times threshold. If it is determined that the number of times the base station sends the first signal continuously or the number of times the terminal receives the first signal continuously is less than a fifth cumulative number of times threshold, then the value of at least one monitoring configuration information in the third monitoring configuration information set is increased by a factor of X; if it is determined that the number of times the base station sends the first signal continuously or the number of times the terminal receives the first signal continuously is greater than or equal to a sixth cumulative number of times threshold, then the value of at least one monitoring configuration information in the third monitoring configuration information set is decreased by a factor of Y, wherein the fifth cumulative number of times threshold is less than the sixth cumulative number of times threshold, and both X and Y are real numbers greater than or equal to 1.

For example, the value of the third monitoring cycle in the third monitoring configuration information set is 320ms, the fifth cumulative number of times threshold is i, the sixth cumulative number of times threshold is j, and i<j. In a specific time window, if the number of times the base station sends the first signal continuously obtained by the terminal is u (u<i), then the third monitoring cycle in the third monitoring configuration information set is increased by a factor of 1 and is set as 640ms; if the number of times the base station sends the first signal continuously obtained by the terminal is u (u≥j), then the third monitoring cycle in the third monitoring configuration information set is decreased by a factor of 1 and is set as 160ms.

Taking the transmission statistic data being the number of times the base station sends the first signal discontinuously or the number of times the terminal receives the first signal discontinuously as an example, the terminal may use the following configuration method when adjusting the value of the corresponding monitoring configuration information in the third monitoring configuration information set.

The terminal obtains the number of times the base station sends the first signal discontinuously or the number of times the terminal receives the first signal discontinuously, and compares the number of times with a corresponding cumulative number of times threshold. If it is determined that the number of times the base station sends the first signal discontinuously or the number of times the terminal receives the first signal discontinuously is less than a seventh cumulative number of times threshold, then the value of at least one monitoring configuration information in the third monitoring configuration information set is decreased by a factor of K; if it is determined that the number of times the base station sends the first signal discontinuously or the number of times the terminal receives the first signal discontinuously is greater than or equal to an eighth cumulative number of times threshold, then the value of at least one monitoring configuration information in the third monitoring configuration information set is increased by a factor of L, wherein the seventh cumulative number of times threshold is less than the eighth cumulative number of times threshold, and both K and L are real numbers greater than 1.

In the above embodiments of the present application, at least one item in the third monitoring configuration information set is adjusted according to the transmission statistic data of the first signal, such as the probability to send or not receive the first signal, the number of times the first signal is sent or received continuously, etc., so that the number of monitoring occasions of the first signal in the third monitoring configuration information set is not greater than the number of monitoring occasions in the monitoring patterns corresponding to the first monitoring configuration information set and the second monitoring configuration information set, thereby reducing the power consumption consumed by the terminal to monitor the first signal.

In some embodiments of the present application, the third monitoring configuration information set of the first signal may also be determined by the base station and notified by the base station to the terminal, so that the terminal monitors and receives the first signal according to the third monitoring configuration information set.

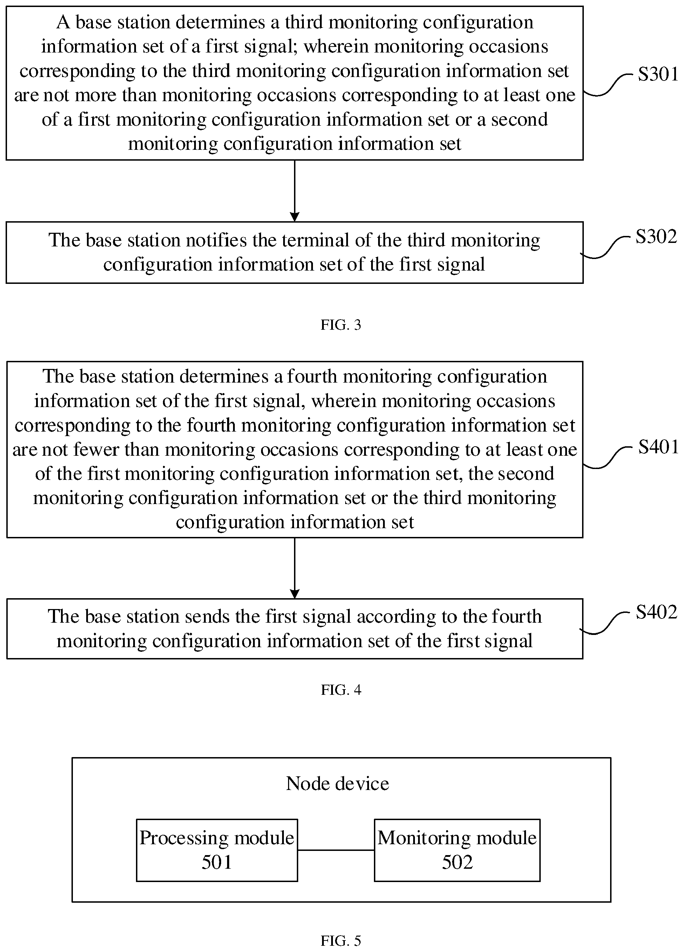

FIG. 3 exemplarily shows a schematic diagram of a signal transmission process implemented on the base station side according to an embodiment of the present application. As shown in the figure, this process may include S301 and S302.

S301: a base station determines a third monitoring configuration information set of a first signal; wherein monitoring occasions corresponding to the third monitoring configuration information set are not more than monitoring occasions corresponding to at least one of a first monitoring configuration information set or a second monitoring configuration information set.

In this step, the related description of the first monitoring configuration information set and the second monitoring configuration information set refer to the foregoing embodiments. The principle of the specific implementations in which the base station determines the third monitoring configuration information set of the first signal is basically the same as that of the specific implementations in which the terminal determines the third monitoring configuration information set of the first signal in the foregoing embodiments, and will not be repeated herein.

S302: the base station notifies the terminal of the third monitoring configuration information set of the first signal.

In this step, the base station may notify the terminal of the third monitoring configuration information set through at least one of RRC signaling, dynamic signaling, or high-layer signaling.

In embodiments of the present application, the base station may determine the third monitoring configuration information set of the first signal according to at least one of the first monitoring configuration information set or the second monitoring configuration information set of the first signal. In other embodiments, the base station may determine the third monitoring configuration information set of the first signal according to high-layer signaling or a predefined rule.

In other embodiments of the present application, the base station may determine a fourth monitoring configuration information set of the first signal according to at least one of the first monitoring configuration information set, the second monitoring configuration information set or the third monitoring configuration information set of the first signal, and send the first signal according to the fourth monitoring configuration information set.

FIG. 4 exemplarily shows a schematic diagram of a signal transmission process implemented on the base station side according to an embodiment of the present application. As shown in the figure, this process may include S401 and S402.

S401: the base station determines a fourth monitoring configuration information set of the first signal, wherein monitoring occasions corresponding to the fourth monitoring configuration information set are not fewer than monitoring occasions corresponding to at least one of the first monitoring configuration information set, the second monitoring configuration information set or the third monitoring configuration information set.

In this step, the monitoring configuration information in the fourth monitoring configuration information set includes at least one of: a fourth monitoring cycle of the first signal, a fourth monitoring time offset value of the first signal, a first monitoring position of a fourth monitoring occasion of the first signal, the number of monitoring frames in the fourth monitoring cycle of the first signal, the number of monitoring occasions of the first signal in each monitoring frame, the number of fourth frequency domain resources of the first signal, a configuration offset value of the fourth frequency domain resources of the first signal, a fourth sequence configuration of the first signal, the number of fourth spatial domain resources of the first signal, a fourth monitoring threshold of the first signal, an offset value of the fourth monitoring threshold, the length of the continuous monitoring time corresponding to a monitoring occasion in a monitoring frame, or the number of symbols corresponding to a monitoring occasion in a monitoring frame.

Here, the third monitoring configuration information set may be determined by the base station according to at least one of the first monitoring configuration information set or the second monitoring configuration information set, wherein the specific implementations in which the base station determines the third monitoring configuration information set may refer to the foregoing embodiments. The third monitoring configuration information set may also be determined and then indicated by the terminal to the base station, wherein the specific implementations in which the terminal determines the third monitoring configuration information set may refer to the foregoing embodiments.

Here, the description of the first monitoring configuration information set and the second monitoring configuration information set refer to the foregoing embodiments.

The fourth monitoring configuration information set may be different from at least one of the first monitoring configuration information set, the second monitoring configuration information set or the third monitoring configuration information set, including at least one of the different amount of monitoring configuration information and different values of monitoring configuration information.

In this step, the base station may determine the fourth monitoring configuration information set of the first signal according to at least one of the first monitoring configuration information set, the second monitoring configuration information set or the third monitoring configuration information set of the first signal.

S402: the base station sends the first signal according to the fourth monitoring configuration information set of the first signal.

In the above embodiments of the present application, the base station sends the first signal by using the fourth monitoring configuration information set different from the third monitoring parameter set configured for the terminal to monitor the first signal, decoupling the correlation between sending the first signal by the base station and receiving the first signal by the terminal, and improving the flexibility of the base station to send the first signal.

In the above embodiments of the present application, a value of at least one monitoring configuration information in the fourth monitoring configuration information set is not greater than a minimum value of corresponding monitoring configuration information in the first monitoring configuration information set, the second monitoring configuration information set and the third monitoring configuration information set; wherein the monitoring configuration information includes at least one of: a monitoring threshold, a monitoring cycle, the number of monitoring frames in a monitoring cycle, the number of monitoring occasions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources. Specifically, the monitoring configuration information includes: at least one of a monitoring threshold or a monitoring cycle. In a specific implementation, the monitoring configuration information may be at least one of the monitoring threshold or the monitoring cycle.

Taking the case of configuring the monitoring cycle in the fourth monitoring configuration information set as an example, the value of the monitoring cycle in the fourth monitoring configuration information set can be set to be the same as or a factor of the minimum of the monitoring cycles in the first monitoring configuration information set, the second monitoring configuration information set and the third monitoring configuration information set, so that the base station sends the first signal according to the fourth monitoring configuration information different from the third monitoring configuration information set used by the terminal, decoupling the correlation between sending the first signal by the base station and receiving the first signal by the terminal, and improving the flexibility of the base station to send the first signal.

In some embodiments of the present application, after determining that the value of at least one monitoring configuration information in the fourth monitoring configuration information set is not greater than the minimum value of the corresponding monitoring configuration information in the first monitoring configuration information set, the second monitoring configuration information set and the third monitoring configuration information set, the value of other monitoring configuration information in the fourth monitoring configuration information set may be determined according to the configuration information set where the at least one monitoring configuration information determined is located.

For example, if the monitoring threshold in the fourth monitoring configuration information set is less than or equal to the minimum of the monitoring thresholds in the first monitoring configuration information set, the second monitoring configuration information set and the third monitoring configuration information set, the value of other monitoring configuration information in the fourth monitoring configuration information set is the same as the value of the corresponding monitoring configuration information in the monitoring configuration information set where the maximum monitoring threshold is located, or may be the same as the value of the corresponding monitoring configuration information in the monitoring configuration information set where the minimum monitoring threshold is located.

For another example, if the monitoring cycle in the fourth monitoring configuration information set is less than or equal to the minimum of the monitoring cycles in the first monitoring configuration information set, the second monitoring configuration information set and the third monitoring configuration information set, the value of other monitoring configuration information in the fourth monitoring configuration information set is the same as the value of the corresponding monitoring configuration information in the monitoring configuration information set where the minimum monitoring cycle is located.

In some embodiments of the present application, the value of the monitoring configuration information in the fourth monitoring configuration information set is not less than the maximum value of the corresponding monitoring configuration information in the first monitoring configuration information set, the second monitoring configuration information set and the third monitoring configuration information set. wherein the monitoring configuration information includes at least one of: a monitoring threshold, a monitoring cycle, the number of monitoring frames in a monitoring cycle, the number of monitoring occasions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources. In a specific implementation, the monitoring configuration information may be at least one of: the number of monitoring frames in a monitoring cycle, the number of monitoring occasions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources.

Taking the case of configuring the number of monitoring frames in the fourth monitoring configuration information set as an example, the number of monitoring frames in the fourth monitoring configuration information set can be set to be the same as or an integral multiple of the maximum of the numbers of monitoring frames in the first monitoring configuration information set, the second monitoring configuration information set and the third monitoring configuration information set, so that the base station sends the first signal according to the fourth monitoring configuration information different from the third monitoring configuration information set used by the terminal, decoupling the correlation between sending the first signal by the base station and receiving the first signal by the terminal, and improving the flexibility of the base station to send the first signal.

In some embodiments of the present application, after determining that the value of at least one monitoring configuration information in the fourth monitoring configuration information set is greater than or equal to the maximum value of the corresponding monitoring configuration information in the first monitoring configuration information set, the second monitoring configuration information set and the third monitoring configuration information set, the value of other monitoring configuration information in the fourth monitoring configuration information set may be determined according to the configuration information set where the at least one monitoring configuration information determined is located.

For example, if the number of monitoring frames in the fourth monitoring configuration information set is greater than or equal to the maximum of the numbers of monitoring frames in the first monitoring configuration information set, the second monitoring configuration information set and the third monitoring configuration information set, the value of other monitoring configuration information in the fourth monitoring configuration information set is the same as the value of the corresponding monitoring configuration information in the monitoring configuration information set where the maximum number of monitoring frames is located.

For another example, if the number of monitoring occasions in the third monitoring configuration information set is greater than or equal to the maximum of the numbers of monitoring occasions in the first monitoring configuration information set and the second monitoring configuration information set, the value of other monitoring configuration information in the third monitoring configuration information set is the same as the value of the corresponding monitoring configuration information in the monitoring configuration information set where the maximum number of monitoring occasions is located, so that the base station sends the first signal according to the fourth monitoring configuration information different from the third monitoring configuration information set used by the terminal, decoupling the correlation between sending the first signal by the base station and receiving the first signal by the terminal, and improving the flexibility of the base station to send the first signal.

In some embodiments of the present application, the base station may obtain the transmission statistic data of the first signal, and determine the value of at least one monitoring configuration information in the fourth monitoring configuration information set according to the transmission statistic data and at least one of the first monitoring configuration information set, the second monitoring configuration information set or the third monitoring configuration information set, wherein the monitoring configuration information includes at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources.

The scheme of determining the fourth monitoring configuration information set according to the transmission statistic data and the value of at least one monitoring configuration information in the first monitoring configuration information set, the second monitoring configuration information set and the third monitoring configuration information set in the embodiments of the present application will be illustrated below by several examples.

Taking the transmission statistic data being the probability of the base station to send the first signal or the probability of the terminal to receive the first signal as an example, the base station may use the following configuration method when configuring the fourth monitoring configuration information set.

The base station obtains the probability of the base station to send the first signal or the probability of the terminal to receive the first signal, and compares the probability with a corresponding probability threshold. If it is determined that the probability of the base station to send the first signal or the probability of the terminal to receive the first signal is less than a ninth probability threshold, then the value of at least one monitoring configuration information in the fourth monitoring configuration information set is set to be less than or equal to the minimum value of the corresponding monitoring configuration information in the first monitoring configuration information set, the second monitoring configuration information set and the third monitoring configuration information set; if it is determined that the probability of the base station to send the first signal or the probability of the terminal to receive the first signal is greater than or equal to a tenth probability threshold, then the value of at least one monitoring configuration information in the fourth monitoring configuration information set is set to be greater than or equal to the maximum value of the corresponding monitoring configuration information in the first monitoring configuration information set, the second monitoring configuration information set and the third monitoring configuration information set, wherein the ninth probability threshold is less than the tenth probability threshold.

For example, the ninth probability threshold is 20%, the tenth probability threshold is 80%, the first monitoring cycle in the first monitoring configuration information set is 320ms, the second monitoring cycle in the second monitoring configuration information set is 640ms, and the third monitoring cycle in the third monitoring configuration information set is 1280ms. In a specific time window, if the probability of the base station to send the first signal is 90%, indicating that it is greater than the tenth probability threshold, then the fourth monitoring cycle in the fourth monitoring configuration information set is set as 1280ms; under the same condition, the fourth monitoring cycle in the fourth monitoring configuration information set may also be set to be greater than the maximum of the first monitoring cycle, the second monitoring cycle and the third monitoring cycle, for example, the fourth monitoring cycle is set as 2560ms. If the probability of the base station to send the first signal is 10%, indicating that it is less than the ninth probability threshold, then the fourth monitoring cycle in the fourth monitoring configuration information set is set as 320ms; under the same condition, the fourth monitoring cycle in the fourth monitoring configuration information set may also be set to be less than the maximum of the first monitoring cycle, the second monitoring cycle and the third monitoring cycle, for example, the fourth monitoring cycle is set as 160ms.

Taking the transmission statistic data being the probability of the base station to not send the first signal or the probability of the terminal to not receive the first signal as an example, the base station may use the following configuration method when configuring the fourth monitoring configuration information set.

The base station obtains the probability of the base station to not send the first signal or the probability of the terminal to not receive the first signal, and compares the probability with a corresponding probability threshold. If it is determined that the probability of the base station to not send the first signal or the probability of the terminal to not receive the first signal is less than an eleventh probability threshold, then the value of at least one monitoring configuration information in the fourth monitoring configuration information set is set to be greater than or equal to the maximum value of the corresponding monitoring configuration information in the first monitoring configuration information set, the second monitoring configuration information set and the third monitoring configuration information set; if it is determined that the probability of the base station to not send the first signal or the probability of the terminal to not receive the first signal is less than or equal to a twelfth probability threshold, then the value of at least one monitoring configuration information in the fourth monitoring configuration information set is set to be less than or equal to the minimum value of the corresponding monitoring configuration information in the first monitoring configuration information set, the second monitoring configuration information set and the third monitoring configuration information set, wherein the eleventh probability threshold is less than the twelfth probability threshold.

Taking the transmission statistic data being the number of times the base station sends the first signal continuously or the number of times the terminal receives the first signal continuously as an example, the base station may use the following configuration method when configuring the fourth monitoring configuration information set.

The base station obtains the number of times the base station sends the first signal continuously or the number of times the terminal receives the first signal continuously, and compares the number of times with a corresponding cumulative number of times threshold. If it is determined that the number of times the base station sends the first signal continuously or the number of times the terminal receives the first signal continuously is less than a ninth cumulative number of times threshold, then the value of at least one monitoring configuration information in the fourth monitoring configuration information set is set to be less than or equal to the minimum value of the corresponding monitoring configuration information in the first monitoring configuration information set, the second monitoring configuration information set and the third monitoring configuration information set; if it is determined that the number of times the base station sends the first signal continuously or the number of times the terminal receives the first signal continuously is greater than or equal to a tenth cumulative number of times threshold, then the value of at least one monitoring configuration information in the fourth monitoring configuration information set is set to be greater than or equal to the maximum value of the corresponding monitoring configuration information in the first monitoring configuration information set, the second monitoring configuration information set and the third monitoring configuration information set, wherein the ninth cumulative number of times threshold is less than the tenth cumulative number of times threshold.

For example, the first monitoring cycle in the first monitoring configuration information set is 320ms, the second monitoring cycle in the second monitoring configuration information set is 640ms, the third monitoring cycle in the third monitoring configuration information set is 1280ms, the ninth cumulative number of times threshold is r, the tenth cumulative number of times threshold is t, and r<t. In a specific time window, if the number of times the base station sends the first signal continuously is g and g<r, then the fourth monitoring cycle in the fourth monitoring configuration information set is set as 320ms; under the same condition, the fourth monitoring cycle in the fourth monitoring configuration information set may also be set to be less than the minimum of the first monitoring cycle, the second monitoring cycle and the third monitoring cycle, for example, the fourth monitoring cycle is set as 160ms. If the number of times the base station sends the first signal continuously is g and g≥t, then the fourth monitoring cycle in the fourth monitoring configuration information set is set as 1280ms; under the same condition, the fourth monitoring cycle in the fourth monitoring configuration information set may also be set to be greater than the maximum of the first monitoring cycle, the second monitoring cycle and the third monitoring cycle, for example, the fourth monitoring cycle is set as 2560ms.

Taking the transmission statistic data being the number of times the base station sends the first signal discontinuously or the number of times the terminal receives the first signal discontinuously as an example, the terminal may use the following configuration method when configuring the third monitoring configuration information set.

The base station obtains the number of times the base station sends the first signal discontinuously or the number of times the terminal receives the first signal discontinuously, and compares the number of times with a corresponding cumulative number of times threshold. If it is determined that the number of times the base station sends the first signal discontinuously or the number of times the terminal receives the first signal discontinuously is less than an eleventh cumulative number of times threshold, then the value of at least one monitoring configuration information in the fourth monitoring configuration information set is set to be greater than or equal to the maximum value of the corresponding monitoring configuration information in the first monitoring configuration information set, the second monitoring configuration information set and the third monitoring configuration information set; if it is determined that the number of times the base station sends the first signal discontinuously or the number of times the terminal receives the first signal discontinuously is greater than or equal to a twelfth cumulative number of times threshold, then the value of at least one monitoring configuration information in the fourth monitoring configuration information set is set to be less than or equal to the minimum value of the corresponding monitoring configuration information in the first monitoring configuration information set, the second monitoring configuration information set and the third monitoring configuration information set, wherein the eleventh cumulative number of times threshold is less than the twelfth cumulative number of times threshold.

In some embodiments of the present application, the base station may obtain the transmission statistic data of the first signal, and adjust the value of the monitoring configuration information of the fourth monitoring configuration information set, wherein the monitoring configuration information in the fourth monitoring configuration information set includes at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources.

Taking the transmission statistic data being the probability of the base station to send the first signal or the probability of the terminal to receive the first signal as an example, the base station may use the following configuration method when adjusting the value of the corresponding monitoring configuration information in the fourth monitoring configuration information set.

The base station obtains the probability of the base station to send the first signal or the probability of the terminal to receive the first signal, and compares the probability with a corresponding probability threshold. If it is determined that the probability of the base station to send the first signal or the probability of the terminal to receive the first signal is less than a thirteenth probability threshold, then the value of at least one monitoring configuration information in the fourth monitoring configuration information set is decreased by a factor of N; if it is determined that the probability of the base station to send the first signal or the probability of the terminal to receive the first signal is greater than or equal to a fourteenth probability threshold, then the value of at least one monitoring configuration information in the fourth monitoring configuration information set is increased by a factor of M, wherein the thirteenth probability threshold is less than the fourteenth probability threshold, and both M and N are real numbers greater than or equal to 1.

For example, the value of the fourth monitoring cycle in the fourth monitoring configuration information set is 320ms, the thirteenth probability threshold is 20%, and the fourteenth probability threshold is 80%. In a specific time window, if the probability of the base station to send the first signal is 90%, indicating that it is greater than the fourteenth probability threshold of 80%, the fourth monitoring cycle in the fourth monitoring configuration information set is increased by a factor of 1, and is set as 640ms. If the probability of the base station to send the first signal is 10%, indicating that it is less than the thirteenth probability threshold of 20%, the fourth monitoring cycle in the fourth monitoring configuration information set is decreased by a factor of 1 and is set as 160ms.

Taking the transmission statistic data being the probability of the base station to not send the first signal or the probability of the terminal to not receive the first signal as an example, the base station may use the following configuration method when adjusting the value of the corresponding monitoring configuration information in the fourth monitoring configuration information set.

The base station obtains the probability of the base station to not send the first signal or the probability of the terminal to not receive the first signal, and compares the probability with a corresponding probability threshold. If it is determined that the probability of the base station to not send the first signal or the probability of the terminal to not receive the first signal is less than a fifteenth probability threshold, then the value of at least one monitoring configuration information in the fourth monitoring configuration information set is increased by a factor of Q; if it is determined that the probability of the base station to not send the first signal or the probability of the terminal to not receive the first signal is greater than or equal to a sixteenth probability threshold, then the value of at least one monitoring configuration information in the fourth monitoring configuration information set is decreased by a factor of P, wherein the fifteenth probability threshold is less than the sixteenth probability threshold, and both P and Q are real numbers greater than or equal to 1.

Taking the transmission statistic data being the number of times the base station sends the first signal continuously or the number of times the terminal receives the first signal continuously as an example, the base station may use the following configuration method when adjusting the value of the corresponding monitoring configuration information in the fourth monitoring configuration information set.

The base station obtains the number of times the base station sends the first signal continuously or the number of times the terminal receives the first signal continuously, and compares the number of times with a corresponding cumulative number of times threshold. If it is determined that the number of times the base station sends the first signal continuously or the number of times the terminal receives the first signal continuously is less than a thirteenth cumulative number of times threshold, then the value of at least one monitoring configuration information in the fourth monitoring configuration information set is decreased by a factor of Y; if it is determined that the number of times the base station sends the first signal continuously or the number of times the terminal receives the first signal continuously is greater than or equal to a fourteenth cumulative number of times threshold, then the value of at least one monitoring configuration information in the fourth monitoring configuration information set is increased by a factor of X, wherein the thirteenth cumulative number of times threshold is less than the fourteenth cumulative number of times threshold, and both X and Y are real numbers greater than or equal to 1.

For example, the value of the fourth monitoring cycle in the fourth monitoring configuration information set is 320ms, the thirteenth cumulative number of times threshold is µ, the fourteenth cumulative number of times threshold is σ, and µ<σ. In a specific time window, if the number of times the base station sends the first signal continuously is g (g<µ), then the fourth monitoring cycle in the fourth monitoring configuration information set is decreased by a factor of 1 and is set as 160ms; if the number of times the base station sends the first signal continuously is g (g≥σ), then the fourth monitoring cycle in the fourth monitoring configuration information set is increased by a factor of 1 and is set as 640ms.

Taking the transmission statistic data being the number of times the base station sends the first signal discontinuously or the number of times the terminal receives the first signal discontinuously as an example, the base station may use the following configuration method when adjusting the value of the corresponding monitoring configuration information in the fourth monitoring configuration information set.

The base station obtains the number of times the base station sends the first signal discontinuously or the number of times the terminal receives the first signal discontinuously, and compares the number of times with a corresponding cumulative number of times threshold. If it is determined that the number of times the base station sends the first signal discontinuously or the number of times the terminal receives the first signal discontinuously is less than a fifteenth cumulative number of times threshold, then the value of at least one monitoring configuration information in the fourth monitoring configuration information set is increased by a factor of L; if it is determined that the number of times the base station sends the first signal discontinuously or the number of times the terminal receives the first signal discontinuously is greater than or equal to a sixteenth cumulative number of times threshold, then the value of at least one monitoring configuration information in the fourth monitoring configuration information set is decreased by a factor of K, wherein the fifteenth cumulative number of times threshold is less than the sixteenth cumulative number of times threshold, and both K and L are real numbers greater than 1.

In the above embodiments of the present application, the base station adjusts at least one item in the fourth monitoring configuration information set according to the transmission statistic data of the first signal, such as the probability to send or not receive the first signal, the number of times the first signal is sent or received continuously, etc., wherein the fourth monitoring configuration information set may be different from the third monitoring configuration information set, decoupling the correlation between sending the first signal by the base station and receiving the first signal by the terminal, and improving the flexibility of the base station to send the first signal.

Based on the same technical concept, an embodiment of the present application further provides a node device, which can implement the functions on the terminal side in the foregoing embodiments.

FIG. 5 exemplarily shows the structure of the node device in the embodiment of the present application. As shown in the figure, the node device may include a processing module 501 and a monitoring module 502.

The processing module 501 is configured to determine a third monitoring configuration information set of a first signal, wherein monitoring occasions corresponding to the third monitoring configuration information set are not more than monitoring occasions corresponding to at least one of a first monitoring configuration information set or a second monitoring configuration information set; wherein the first monitoring configuration information set is a network-level monitoring configuration information set of the first signal, and the second monitoring configuration information set is a node-level monitoring configuration information set of the first signal.

The monitoring module 502 is configured to monitor the first signal according to the third monitoring configuration information set.

It should be noted here that the above-mentioned node device provided in this embodiment of the present application can implement all the method steps implemented in the above-mentioned method embodiment and can achieve the same technical effects. The parts and beneficial effects in this embodiment same as those in the method embodiment will not be described here in detail.

Based on the same technical concept, an embodiment of the present application further provides a network side device, which can implement the functions of the base station side in the foregoing embodiments.

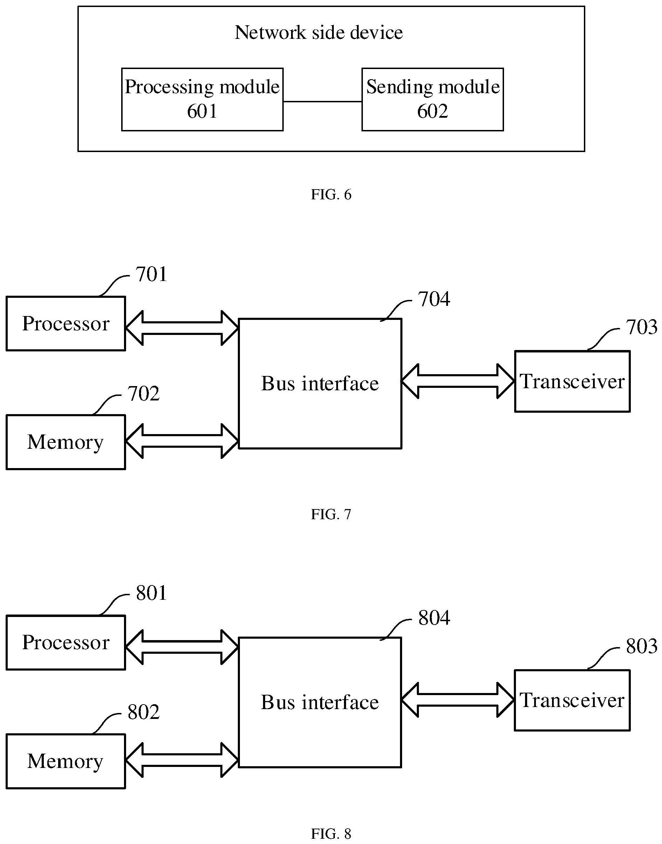

FIG. 6 exemplarily shows the structure of the network side device in the embodiment of the present application. As shown in the figure, the network side device may include a processing module 601 and a sending module 602.

The processing module 601 is configured to determine a third monitoring configuration information set of a first signal, wherein monitoring occasions corresponding to the third monitoring configuration information set are not more than monitoring occasions corresponding to at least one of a first monitoring configuration information set or a second monitoring configuration information set; wherein the first monitoring configuration information set is a network-level monitoring configuration information set of the first signal, and the second monitoring configuration information set is a node-level monitoring configuration information set of the first signal.

The sending module 602 is configured to notify a node device of the third monitoring configuration information set of the first signal.

It should be noted here that the above-mentioned network side device provided in this embodiment of the present application can implement all the method steps implemented in the above-mentioned method embodiment and can achieve the same technical effects. The parts and beneficial effects in this embodiment same as those in the method embodiment will not be described here in detail.

Based on the same technical concept, an embodiment of the present application further provides a node device, which can implement the functions on the terminal side in the foregoing embodiments.

FIG. 7 exemplarily shows a structural schematic diagram of the node device in the embodiment of the present application. As shown in the figure, the node device may include: a processor 701, a memory 702, a transceiver 703 and a bus interface 704.

The processor 701 is responsible for managing the bus architecture and general processing, and the memory 702 may store the data used by the processor 701 when performing the operations. The transceiver 703 is configured to receive and send the data under the control of the processor 701.

The bus architecture may include any numbers of interconnected buses and bridges, and specifically link various circuits of one or more processors represented by the processor 701 and the memory represented by the memory 702. The bus architecture may further link various other circuits such as peripheral device, voltage regulator and power management circuit, which are all well known in the art and thus will not be further described again herein. The bus interface provides an interface. The processor 701 is responsible for managing the bus architecture and general processing, and the memory 702 may store the data used by the processor 701 when performing the operations.

The procedure disclosed by the embodiment of the present application may be applied in the processor 701 or implemented by the processor 701. In the implementation process, each step of the signal processing flow may be completed by the integrated logic circuit of hardware in the processor 701 or the instruction in the form of software. The processor 701 may be a general-purpose processor, a digital signal processor, an application specific integrated circuit, a field programmable gate array or other programmable logic device, a discrete gate or transistor logic device, or a discrete hardware component, and may implement or perform each method, step and logical block diagram disclosed in the embodiments of the present application. The general-purpose processor may be a microprocessor or any conventional processor or the like. The steps of the method disclosed in combination with the embodiments of the present application may be directly completed by a hardware processor, or completed by a combination of hardware and software modules in the processor. The software modules may be located in the random access memory, flash memory, read only memory, programmable read only memory or electrically erasable programmable read only memory, register and other mature storage medium in the art. The storage medium is located in the memory 702, and the processor 701 reads the information in the memory 702 and completes the steps of the signal processing flow in combination with its hardwares. Specifically, the processor 701 is configured to read computer instructions in the memory 702 and execute the functions implemented on the terminal side in the process shown in FIG. 2.

Specifically, the processor 701 may read the computer instructions in the memory 702 to perform the following operations: determining a third monitoring configuration information set of a first signal, wherein monitoring occasions corresponding to the third monitoring configuration information set are not more than monitoring occasions corresponding to at least one of a first monitoring configuration information set or a second monitoring configuration information set; wherein the first monitoring configuration information set is a network-level monitoring configuration information set of the first signal, and the second monitoring configuration information set is a node-level monitoring configuration information set of the first signal; and monitoring the first signal according to the third monitoring configuration information set.

In some embodiments of the present application, determining the third monitoring configuration information set of the first signal, includes:
obtaining at least one of the first monitoring configuration information set or the second monitoring configuration information set of the first signal; and determining the third monitoring configuration information set of the first signal according to at least one of the first monitoring configuration information set or the second monitoring configuration information set; or
determining the third monitoring configuration information set of the first signal according to high-layer signaling or a predefined rule.

In some embodiments of the present application, a value of at least one monitoring configuration information in the third monitoring configuration information set is greater than or equal to a maximum value of corresponding monitoring configuration information in the first monitoring configuration information set and the second monitoring configuration information set; wherein the monitoring configuration information includes at least one of: a monitoring threshold, a monitoring cycle, the number of monitoring frames in a monitoring cycle, the number of monitoring occasions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources.

In some embodiments of the present application, a value of at least one monitoring configuration information in the third monitoring configuration information set is less than or equal to a minimum value of corresponding monitoring configuration information in the first monitoring configuration information set and the second monitoring configuration information set; wherein the monitoring configuration information includes at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources.

In some embodiments of the present application, determining the third monitoring configuration information set of the first signal according to at least one of the first monitoring configuration information set or the second monitoring configuration information set, includes:
obtaining transmission statistic data of the first signal;
determining a value of at least one monitoring configuration information in the third monitoring configuration information set according to the transmission statistic data and at least one of the first monitoring configuration information set or the second monitoring configuration information set.

In some embodiments of the present application, determining a value of at least one monitoring configuration information in the third monitoring configuration information set according to the transmission statistic data and at least one of the first monitoring configuration information set or the second monitoring configuration information set, includes:
setting the value of at least one monitoring configuration information in the third monitoring configuration information set to be greater than or equal to a maximum value of corresponding monitoring configuration information in the first monitoring configuration information set and the second monitoring configuration information set if a probability of a base station to send the first signal or a probability of a terminal to receive the first signal is less than a first probability threshold;
setting the value of at least one monitoring configuration information in the third monitoring configuration information set to be less than or equal to a minimum value of corresponding monitoring configuration information in the first monitoring configuration information set and the second monitoring configuration information set if the probability of the base station to send the first signal or the probability of the terminal to receive the first signal is greater than or equal to a second probability threshold;
wherein the monitoring configuration information includes at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; and the first probability threshold is less than the second probability threshold.

In some embodiments of the present application, determining a value of at least one monitoring configuration information in the third monitoring configuration information set according to the transmission statistic data and at least one of the first monitoring configuration information set or the second monitoring configuration information set, includes:
setting the value of at least one monitoring configuration information in the third monitoring configuration information set to be less than or equal to a minimum value of corresponding monitoring configuration information in the first monitoring configuration information set and the second monitoring configuration information set if a probability of a base station to not send the first signal or a probability of a terminal to not receive the first signal is less than a third probability threshold;
setting the value of at least one monitoring configuration information in the third monitoring configuration information set to be greater than or equal to a maximum value of corresponding monitoring configuration information in the first monitoring configuration information set and the second monitoring configuration information set if the probability of the base station to not send the first signal or the probability of the terminal to not receive the first signal is greater than or equal to a fourth probability threshold;
wherein the monitoring configuration information includes at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; and the third probability threshold is less than the fourth probability threshold.

In some embodiments of the present application, determining a value of at least one monitoring configuration information in the third monitoring configuration information set according to the transmission statistic data and at least one of the first monitoring configuration information set or the second monitoring configuration information set, includes:
setting the value of at least one monitoring configuration information in the third monitoring configuration information set to be greater than or equal to a maximum value of corresponding monitoring configuration information in the first monitoring configuration information set and the second monitoring configuration information set if the number of times a base station sends the first signal continuously or the number of times a terminal receives the first signal continuously is less than a first cumulative number of times threshold;
setting the value of at least one monitoring configuration information in the third monitoring configuration information set to be less than or equal to a minimum value of corresponding monitoring configuration information in the first monitoring configuration information set and the second monitoring configuration information set if the number of times the base station sends the first signal continuously or the number of times the terminal receives the first signal continuously is greater than or equal to a second cumulative number of times threshold;
wherein the monitoring configuration information includes at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; and the first cumulative number of times threshold is less than the second cumulative number of times threshold.

In some embodiments of the present application, determining a value of at least one monitoring configuration information in the third monitoring configuration information set according to the transmission statistic data and at least one of the first monitoring configuration information set or the second monitoring configuration information set, includes:
setting the value of at least one monitoring configuration information in the third monitoring configuration information set to be less than or equal to a minimum value of corresponding monitoring configuration information in the first monitoring configuration information set and the second monitoring configuration information set if the number of times a base station sends the first signal discontinuously or the number of times a terminal receives the first signal discontinuously is less than a third cumulative number of times threshold;
setting the value of at least one monitoring configuration information in the third monitoring configuration information set to be greater than or equal to a maximum value of corresponding monitoring configuration information in the first monitoring configuration information set and the second monitoring configuration information set if the number of times the base station sends the first signal discontinuously or the number of times the terminal receives the first signal discontinuously is greater than or equal to a fourth cumulative number of times threshold;
wherein the monitoring configuration information includes at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; and the third cumulative number of times threshold is less than the fourth cumulative number of times threshold.

In some embodiments of the present application, the performed operations further include:
obtaining transmission statistic data of the first signal;
adjusting a value of monitoring configuration information in the third monitoring configuration information set of the first signal according to the transmission statistic data of the first signal.

In some embodiments of the present application, adjusting a value of monitoring configuration information in the third monitoring configuration information set of the first signal according to the transmission statistic data of the first signal to obtain the third monitoring configuration information set, includes:
increasing a value of at least one monitoring configuration information in the third monitoring configuration information set by a factor of M if a probability of a base station to send the first signal or a probability of a terminal to receive the first signal is less than a fifth probability threshold;
decreasing a value of at least one monitoring configuration information in the third monitoring configuration information set by a factor of N if the probability of the base station to send the first signal or the probability of the terminal to receive the first signal is greater than or equal to a sixth probability threshold;
wherein the monitoring configuration information includes at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; the fifth probability threshold is less than the sixth probability threshold, and both M and N are real numbers greater than or equal to 1.

In some embodiments of the present application, adjusting a value of monitoring configuration information in the third monitoring configuration information set of the first signal according to the transmission statistic data of the first signal, includes:
decreasing a value of at least one monitoring configuration information in the third monitoring configuration information set by a factor of P if a probability of a base station to not send the first signal or a probability of a terminal to not receive the first signal is less than a seventh probability threshold;
increasing a value of at least one monitoring configuration information in the third monitoring configuration information set by a factor of Q if the probability of the base station to not send the first signal or the probability of the terminal to not receive the first signal is greater than or equal to an eighth probability threshold;
wherein the monitoring configuration information includes at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; the seventh probability threshold is less than the eighth probability threshold, and both P and Q are real numbers greater than or equal to 1.

In some embodiments of the present application, adjusting a value of monitoring configuration information in the third monitoring configuration information set of the first signal according to the transmission statistic data of the first signal, includes:
increasing a value of at least one monitoring configuration information in the third monitoring configuration information set by a factor of X if the number of times a base station sends the first signal continuously or the number of times a terminal receives the first signal continuously is less than a fifth cumulative number of times threshold;
decreasing a value of at least one monitoring configuration information in the third monitoring configuration information set by a factor of Y if a probability of the base station to send the first signal continuously or a probability of the terminal to receive the first signal continuously is greater than or equal to a sixth cumulative number of times threshold;
wherein the monitoring configuration information includes at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; the fifth cumulative number of times threshold is less than the sixth cumulative number of times threshold, and both X and Y are real numbers greater than or equal to 1.

In some embodiments of the present application, adjusting a value of monitoring configuration information in the third monitoring configuration information set of the first signal according to the transmission statistic data of the first signal, includes:
decreasing a value of at least one monitoring configuration information in the third monitoring configuration information set by a factor of K if the number of times a base station sends the first signal discontinuously or the number of times a terminal receives the first signal discontinuously is less than a seventh cumulative number of times threshold;
increasing a value of at least one monitoring configuration information in the third monitoring configuration information set by a factor of L if a probability of the base station to send the first signal discontinuously or a probability of the terminal to receive the first signal discontinuously is greater than or equal to an eighth cumulative number of times threshold;
wherein the monitoring configuration information includes at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; the seventh cumulative number of times threshold is less than the eighth cumulative number of times threshold, and both K and L are real numbers greater than or equal to 1.

In some embodiments of the present application, the first signal includes at least one of a paging signal, a wake-up signal or a short message.

It should be noted here that the above-mentioned node device provided in this embodiment of the present application can implement all the method steps implemented in the above-mentioned method embodiment and can achieve the same technical effects. The parts and beneficial effects in this embodiment same as those in the method embodiment will not be described here in detail.

Based on the same technical concept, an embodiment of the present application further provides a network side device, which can implement the functions of the base station side in the foregoing embodiments.

FIG. 8 exemplarily shows a structural schematic diagram of the network side device in the embodiment of the present application. As shown in the figure, the network side device may include: a processor 801, a memory 802, a transceiver 803 and a bus interface 804.

The processor 801 is responsible for managing the bus architecture and general processing, and the memory 802 may store the data used by the processor 801 when performing the operations. The transceiver 803 is configured to receive and send the data under the control of the processor 801.

The bus architecture may include any numbers of interconnected buses and bridges, and specifically link various circuits of one or more processors represented by the processor 801 and the memory represented by the memory 802. The bus architecture may further link various other circuits such as peripheral device, voltage regulator and power management circuit, which are all well known in the art and thus will not be further described again herein. The bus interface provides an interface. The processor 801 is responsible for managing the bus architecture and general processing, and the memory 802 may store the data used by the processor 801 when performing the operations.

The procedure disclosed by the embodiment of the present application may be applied in the processor 801 or implemented by the processor 801. In the implementation process, each step of the signal processing flow may be completed by the integrated logic circuit of hardware in the processor 801 or the instruction in the form of software. The processor 801 may be a general-purpose processor, a digital signal processor, an application specific integrated circuit, a field programmable gate array or other programmable logic device, a discrete gate or transistor logic device, or a discrete hardware component, and may implement or perform each method, step and logical block diagram disclosed in the embodiments of the present application. The general-purpose processor may be a microprocessor or any conventional processor or the like. The steps of the method disclosed in combination with the embodiments of the present application may be directly completed by a hardware processor, or completed by a combination of hardware and software modules in the processor. The software modules may be located in the random access memory, flash memory, read only memory, programmable read only memory or electrically erasable programmable read only memory, register and other mature storage medium in the art. The storage medium is located in the memory 802, and the processor 801 reads the information in the memory 802 and completes the steps of the signal processing flow in combination with its hardwares. Specifically, the processor 801 is configured to read computer instructions in the memory 802 and execute the functions implemented on the base station side in the processes shown in FIG. 3 and FIG. 4.

Specifically, the processor 801 may read the computer instructions in the memory 802 to perform the following operations:
determining a third monitoring configuration information set of a first signal, wherein monitoring occasions corresponding to the third monitoring configuration information set are not more than monitoring occasions corresponding to at least one of a first monitoring configuration information set or a second monitoring configuration information set; wherein the first monitoring configuration information set is a network-level monitoring configuration information set of the first signal, and the second monitoring configuration information set is a node-level monitoring configuration information set of the first signal;
notifying a terminal of the third monitoring configuration information set of the first signal.

In some embodiments of the present application, determining the third monitoring configuration information set of the first signal, includes:
determining the third monitoring configuration information set of the first signal according to at least one of the first monitoring configuration information set or the second monitoring configuration information set of the first signal; or
determining the third monitoring configuration information set of the first signal according to high-layer signaling or a predefined rule.

In some embodiments of the present application, a value of at least one monitoring configuration information in the third monitoring configuration information set is greater than or equal to a maximum value of corresponding monitoring configuration information in the first monitoring configuration information set and the second monitoring configuration information set; wherein the monitoring configuration information includes at least one of: a monitoring threshold, a monitoring cycle, the number of monitoring frames in a monitoring cycle, the number of monitoring occasions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources.

In some embodiments of the present application, a value of at least one monitoring configuration information in the third monitoring configuration information set is less than or equal to a minimum value of corresponding monitoring configuration information in the first monitoring configuration information set and the second monitoring configuration information set; wherein the monitoring configuration information includes at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources.

In some embodiments of the present application, determining a value of at least one monitoring configuration information in the third monitoring configuration information set of the first signal according to at least one of the first monitoring configuration information set or the second monitoring configuration information set of the first signal, includes:
obtaining transmission statistic data of the first signal;
determining the third monitoring configuration information set according to the transmission statistic data and at least one of the first monitoring configuration information set or the second monitoring configuration information set.

In some embodiments of the present application, determining a value of at least one monitoring configuration information in the third monitoring configuration information set according to the transmission statistic data and at least one of the first monitoring configuration information set or the second monitoring configuration information set, includes:
setting the value of at least one monitoring configuration information in the third monitoring configuration information set to be greater than or equal to a maximum value of corresponding monitoring configuration information in the first monitoring configuration information set and the second monitoring configuration information set if a probability of a base station to send the first signal or a probability of a terminal to receive the first signal is less than a first probability threshold;
setting the value of at least one monitoring configuration information in the third monitoring configuration information set to be less than or equal to a minimum value of corresponding monitoring configuration information in the first monitoring configuration information set and the second monitoring configuration information set if the probability of the base station to send the first signal or the probability of the terminal to receive the first signal is greater than or equal to a second probability threshold;
wherein the monitoring configuration information includes at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; and the first probability threshold is less than the second probability threshold.

In some embodiments of the present application, determining a value of at least one monitoring configuration information in the third monitoring configuration information set according to the transmission statistic data and at least one of the first monitoring configuration information set or the second monitoring configuration information set, includes:
setting the value of at least one monitoring configuration information in the third monitoring configuration information set to be less than or equal to a minimum value of corresponding monitoring configuration information in the first monitoring configuration information set and the second monitoring configuration information set if a probability of a base station to not send the first signal or a probability of a terminal to not receive the first signal is less than a third probability threshold;
setting the value of at least one monitoring configuration information in the third monitoring configuration information set to be greater than or equal to a maximum value of corresponding monitoring configuration information in the first monitoring configuration information set and the second monitoring configuration information set if the probability of the base station to not send the first signal or the probability of the terminal to not receive the first signal is greater than or equal to a fourth probability threshold;
wherein the monitoring configuration information includes at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; and the third probability threshold is less than the fourth probability threshold.

In some embodiments of the present application, determining the third monitoring configuration information set according to the transmission statistic data and at least one of the first monitoring configuration information set or the second monitoring configuration information set, includes:
setting the value of at least one monitoring configuration information in the third monitoring configuration information set to be greater than or equal to a maximum value of corresponding monitoring configuration information in the first monitoring configuration information set and the second monitoring configuration information set if the number of times a base station sends the first signal continuously or the number of times a terminal receives the first signal continuously is less than a first cumulative number of times threshold;
setting the value of at least one monitoring configuration information in the third monitoring configuration information set to be less than or equal to a minimum value of corresponding monitoring configuration information in the first monitoring configuration information set and the second monitoring configuration information set if the number of times the base station sends the first signal continuously or the number of times the terminal receives the first signal continuously is greater than or equal to a second cumulative number of times threshold;
wherein the monitoring configuration information includes at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; and the first cumulative number of times threshold is less than the second cumulative number of times threshold.

In some embodiments of the present application, determining a value of at least one monitoring configuration information in the third monitoring configuration information set according to the transmission statistic data and at least one of the first monitoring configuration information set or the second monitoring configuration information set, includes:
setting the value of at least one monitoring configuration information in the third monitoring configuration information set to be less than or equal to a minimum value of corresponding monitoring configuration information in the first monitoring configuration information set and the second monitoring configuration information set if the number of times a base station sends the first signal discontinuously or the number of times a terminal receives the first signal discontinuously is less than a third cumulative number of times threshold;
setting the value of at least one monitoring configuration information in the third monitoring configuration information set to be greater than or equal to a maximum value of corresponding monitoring configuration information in the first monitoring configuration information set and the second monitoring configuration information set if the number of times the base station sends the first signal discontinuously or the number of times the terminal receives the first signal discontinuously is greater than or equal to a fourth cumulative number of times threshold;
wherein the monitoring configuration information includes at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; and the third cumulative number of times threshold is less than the fourth cumulative number of times threshold.

In some embodiments of the present application, the performed operations further include:
obtaining transmission statistic data of the first signal;
adjusting a value of monitoring configuration information in the third monitoring configuration information set of the first signal according to the transmission statistic data of the first signal.

In some embodiments of the present application, adjusting a value of monitoring configuration information in the third monitoring configuration information set of the first signal according to the transmission statistic data of the first signal, includes:
increasing a value of at least one monitoring configuration information in the third monitoring configuration information set by a factor of M if a probability of a base station to send the first signal or a probability of a terminal to receive the first signal is less than a fifth probability threshold;
decreasing a value of at least one monitoring configuration information in the third monitoring configuration information set by a factor of N if the probability of the base station to send the first signal or the probability of the terminal to receive the first signal is greater than or equal to a sixth probability threshold;
wherein the monitoring configuration information includes at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; the fifth probability threshold is less than the sixth probability threshold, and both M and N are real numbers greater than 1.

In some embodiments of the present application, adjusting a value of monitoring configuration information in the third monitoring configuration information set of the first signal according to the transmission statistic data of the first signal, includes:
decreasing a value of at least one monitoring configuration information in the third monitoring configuration information set by a factor of P if a probability of a base station to not send the first signal or a probability of a terminal to not receive the first signal is less than a seventh probability threshold;
increasing a value of at least one monitoring configuration information in the third monitoring configuration information set by a factor of Q if the probability of the base station to not send the first signal or the probability of the terminal to not receive the first signal is greater than or equal to an eighth probability threshold;
wherein the monitoring configuration information includes at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; the seventh probability threshold is less than the eighth probability threshold, and both P and Q are real numbers greater than 1.

In some embodiments of the present application, adjusting a value of monitoring configuration information in the third monitoring configuration information set of the first signal according to the transmission statistic data of the first signal, includes:
increasing a value of at least one monitoring configuration information in the third monitoring configuration information set by a factor of X if the number of times a base station sends the first signal continuously or the number of times a terminal receives the first signal continuously is less than a fifth cumulative number of times threshold;
decreasing a value of at least one monitoring configuration information in the third monitoring configuration information set by a factor of Y if a probability of the base station to send the first signal continuously or a probability of the terminal to receive the first signal continuously is greater than or equal to a sixth cumulative number of times threshold;
wherein the monitoring configuration information includes at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; the fifth cumulative number of times threshold is less than the sixth cumulative number of times threshold, and both X and Y are real numbers greater than 1.

In some embodiments of the present application, adjusting a value of monitoring configuration information in the third monitoring configuration information set of the first signal according to the transmission statistic data of the first signal, includes:
decreasing a value of at least one monitoring configuration information in the third monitoring configuration information set by a factor of K if the number of times a base station sends the first signal discontinuously or the number of times a terminal receives the first signal discontinuously is less than a seventh cumulative number of times threshold;
increasing a value of at least one monitoring configuration information in the third monitoring configuration information set by a factor of L if a probability of the base station to send the first signal discontinuously or a probability of the terminal to receive the first signal discontinuously is greater than or equal to an eighth cumulative number of times threshold;
wherein the monitoring configuration information includes at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; the seventh cumulative number of times threshold is less than the eighth cumulative number of times threshold, and both K and L are real numbers greater than or equal to 1.

In some embodiments of the present application, the performed operations further include:
determining a fourth monitoring configuration information set of the first signal, wherein monitoring occasions corresponding to the fourth monitoring configuration information set are not fewer than monitoring occasions corresponding to at least one of the first monitoring configuration information set, the second monitoring configuration information set or the third monitoring configuration information set;
sending the first signal according to the fourth monitoring configuration information set of the first signal.

In some embodiments of the present application, determining the fourth monitoring configuration information set of the first signal, includes:
determining the fourth monitoring configuration information set of the first signal according to at least one of the first monitoring configuration information set, the second monitoring configuration information set or the third monitoring configuration information set of the first signal.

In some embodiments of the present application, a value of at least one monitoring configuration information in the fourth monitoring configuration information set is not greater than a minimum value of corresponding monitoring configuration information in the first monitoring configuration information set, the second monitoring configuration information set and the third monitoring configuration information set; wherein the monitoring configuration information includes at least one of: a monitoring threshold, a monitoring cycle, the number of monitoring frames in a monitoring cycle, the number of monitoring occasions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources.

In some embodiments of the present application, a value of at least one monitoring configuration information in the fourth monitoring configuration information set is not less than a maximum value of corresponding monitoring configuration information in the first monitoring configuration information set, the second monitoring configuration information set and the third monitoring configuration information set; wherein the monitoring configuration information includes at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources.

In some embodiments of the present application, determining the fourth monitoring configuration information set of the first signal according to at least one of the first monitoring configuration information set, the second monitoring configuration information set or the third monitoring configuration information set of the first signal, includes:
obtaining transmission statistic data of the first signal;
determining a value of at least one monitoring configuration information in the fourth monitoring configuration information set according to the transmission statistic data and at least one of the first monitoring configuration information set, the second monitoring configuration information set or the third monitoring configuration information set.

In some embodiments of the present application, determining a value of at least one monitoring configuration information in the fourth monitoring configuration information set according to the transmission statistic data and at least one of the first monitoring configuration information set, the second monitoring configuration information set or the third monitoring configuration information set, includes:
setting the value of at least one monitoring configuration information in the fourth monitoring configuration information set to be less than or equal to a minimum value of corresponding monitoring configuration information in the first monitoring configuration information set, the second monitoring configuration information set and the third monitoring configuration information set if a probability of a base station to send the first signal or a probability of a terminal to receive the first signal is less than a ninth probability threshold;
setting the value of at least one monitoring configuration information in the fourth monitoring configuration information set to be greater than or equal to a maximum value of corresponding monitoring configuration information in the first monitoring configuration information set, the second monitoring configuration information set and the third monitoring configuration information set if the probability of the base station to send the first signal or the probability of the terminal to receive the first signal is greater than or equal to a tenth probability threshold;
wherein the monitoring configuration information includes at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; and the ninth probability threshold is less than the tenth probability threshold.

In some embodiments of the present application, determining a value of at least one monitoring configuration information in the fourth monitoring configuration information set according to the transmission statistic data and at least one of the first monitoring configuration information set, the second monitoring configuration information set or the third monitoring configuration information set, includes:
setting the value of at least one monitoring configuration information in the fourth monitoring configuration information set to be greater than or equal to a maximum value of corresponding monitoring configuration information in the first monitoring configuration information set, the second monitoring configuration information set and the third monitoring configuration information set if a probability of a base station to not send the first signal or a probability of a terminal to not receive the first signal is less than an eleventh probability threshold;
setting the value of at least one monitoring configuration information in the fourth monitoring configuration information set to be less than or equal to a minimum value of corresponding monitoring configuration information in the first monitoring configuration information set, the second monitoring configuration information set and the third monitoring configuration information set if the probability of the base station to not send the first signal or the probability of the terminal to not receive the first signal is greater than or equal to a twelfth probability threshold;
wherein the monitoring configuration information includes at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; and the eleventh probability threshold is less than the twelfth probability threshold.

In some embodiments of the present application, determining a value of at least one monitoring configuration information in the fourth monitoring configuration information set according to the transmission statistic data and at least one of the first monitoring configuration information set, the second monitoring configuration information set or the third monitoring configuration information set, includes:
setting the value of at least one monitoring configuration information in the fourth monitoring configuration information set to be less than or equal to a minimum value of corresponding monitoring configuration information in the first monitoring configuration information set, the second monitoring configuration information set and the third monitoring configuration information set if the number of times a base station sends the first signal continuously or the number of times a terminal receives the first signal continuously is less than a ninth cumulative number of times threshold;
setting the value of at least one monitoring configuration information in the fourth monitoring configuration information set to be greater than or equal to a maximum value of corresponding monitoring configuration information in the first monitoring configuration information set, the second monitoring configuration information set and the third monitoring configuration information set if the number of times the base station sends the first signal continuously or the number of times the terminal receives the first signal continuously is greater than or equal to a tenth cumulative number of times threshold;
wherein the monitoring configuration information includes at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; and the ninth cumulative number of times threshold is less than the tenth cumulative number of times threshold.

In some embodiments of the present application, determining a value of at least one monitoring configuration information in the fourth monitoring configuration information set according to the transmission statistic data and at least one of the first monitoring configuration information set, the second monitoring configuration information set or the third monitoring configuration information set, includes:
setting the value of at least one monitoring configuration information in the fourth monitoring configuration information set to be greater than or equal to a maximum value of corresponding monitoring configuration information in the first monitoring configuration information set, the second monitoring configuration information set and the third monitoring configuration information set if the number of times a base station sends the first signal discontinuously or the number of times a terminal receives the first signal discontinuously is less than an eleventh cumulative number of times threshold;
setting the value of at least one monitoring configuration information in the fourth monitoring configuration information set to be less than or equal to a minimum value of corresponding monitoring configuration information in the first monitoring configuration information set, the second monitoring configuration information set and the third monitoring configuration information set if the number of times the base station sends the first signal discontinuously or the number of times the terminal receives the first signal discontinuously is greater than or equal to a twelfth cumulative number of times threshold;
wherein the monitoring configuration information includes at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; and the eleventh cumulative number of times threshold is less than the twelfth cumulative number of times threshold.

In some embodiments of the present application, the performed operations further include:
obtaining transmission statistic data of the first signal;
adjusting a value of monitoring configuration information in the fourth monitoring configuration information set of the first signal according to the transmission statistic data of the first signal.

In some embodiments of the present application, adjusting a value of monitoring configuration information in the fourth monitoring configuration information set of the first signal according to the transmission statistic data of the first signal, includes:
decreasing a value of at least one monitoring configuration information in the fourth monitoring configuration information set by a factor of N if a probability of a base station to send the first signal or a probability of a terminal to receive the first signal is less than a thirteenth probability threshold;
increasing a value of at least one monitoring configuration information in the fourth monitoring configuration information set by a factor of M if the probability of the base station to send the first signal or the probability of the terminal to receive the first signal is greater than or equal to a fourteenth probability threshold;
wherein the monitoring configuration information includes at least one of: a monitoring threshold, a monitoring cycle, the number of monitoring frames in a monitoring cycle, the number of monitoring positions in a monitoring frame, duration in a monitoring position, the number of monitoring symbols in a monitoring position, the number of monitoring frequency domain resources, or the number of monitoring spatial domain resources; the thirteenth probability threshold is less than the fourteenth probability threshold, and both M and N are real numbers greater than 1.

In some embodiments of the present application, adjusting a value of monitoring configuration information in the fourth monitoring configuration information set of the first signal according to the transmission statistic data of the first signal, includes:
increasing a value of at least one monitoring configuration information in the fourth monitoring configuration information set by a factor of Q if a probability of a base station to not send the first signal or a probability of a terminal to not receive the first signal is less than a fifteenth probability threshold;
decreasing a value of at least one monitoring configuration information in the fourth monitoring configuration information set by a factor of P if the probability of the base station to not send the first signal or the probability of the terminal to not receive the first signal is greater than or equal to a sixteenth probability threshold;
wherein the monitoring configuration information includes at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; the fifteenth probability threshold is less than the sixteenth probability threshold, and both P and Q are real numbers greater than 1.

In some embodiments of the present application, adjusting a value of monitoring configuration information in the fourth monitoring configuration information set of the first signal according to the transmission statistic data of the first signal, includes:
decreasing a value of at least one monitoring configuration information in the fourth monitoring configuration information set by a factor of Y if the number of times a base station sends the first signal continuously or the number of times a terminal receives the first signal continuously is less than a thirteenth cumulative number of times threshold;
increasing a value of at least one monitoring configuration information in the fourth monitoring configuration information set by a factor of X if a probability of the base station to send the first signal continuously or a probability of the terminal to receive the first signal continuously is greater than or equal to a fourteenth cumulative number of times threshold;
wherein the monitoring configuration information includes at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; the thirteenth cumulative number of times threshold is less than the fourteenth cumulative number of times threshold, and both X and Y are real numbers greater than 1.

In some embodiments of the present application, adjusting a value of monitoring configuration information in the fourth monitoring configuration information set of the first signal according to the transmission statistic data of the first signal, includes:
increasing a value of at least one monitoring configuration information in the fourth monitoring configuration information set by a factor of L if the number of times a base station sends the first signal discontinuously or the number of times a terminal receives the first signal discontinuously is less than a fifteenth cumulative number of times threshold;
decreasing a value of at least one monitoring configuration information in the fourth monitoring configuration information set by a factor of K if a probability of the base station to send the first signal discontinuously or a probability of the terminal to receive the first signal discontinuously is greater than or equal to a sixteenth cumulative number of times threshold;
wherein the monitoring configuration information includes at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; the fifteenth cumulative number of times threshold is less than the sixteenth cumulative number of times threshold, and both K and L are real numbers greater than 1.

In some embodiments of the present application, the first signal includes at least one of a paging signal, a wake-up signal or a short message.

It should be noted here that the above-mentioned network side device provided in this embodiment of the invention can implement all the method steps implemented in the above-mentioned method embodiment and can achieve the same technical effects. The parts and beneficial effects in this embodiment same as those in the method embodiment will not be described here in detail.

An embodiment of the present application further provides a computer readable storage medium storing computer executable instructions which are configured to cause the computer to execute the method performed by the terminal in the above-mentioned embodiments.

An embodiment of the present application further provides a computer readable storage medium storing computer executable instructions which are configured to cause the computer to execute the method performed by the base station in the above-mentioned embodiments.

It should be understood by those skilled in the art that the embodiments of the present application can provide methods, systems and computer program products. Thus the present application can take the form of hardware embodiments alone, software embodiments alone, or embodiments combining the software and hardware aspects. Also the present application can take the form of computer program products implemented on one or more computer usable storage mediums (including but not limited to magnetic disk memories, CD-ROMs, optical memories and the like) containing computer usable program codes therein.

The present application is described by reference to the flow charts and/or the block diagrams of the methods, the devices (systems) and the computer program products according to the present application. It should be understood that each process and/or block in the flow charts and/or the block diagrams, and a combination of processes and/or blocks in the flow charts and/or the block diagrams can be implemented by the computer program instructions. These computer program instructions can be provided to a general-purpose computer, a dedicated computer, an embedded processor, or a processor of another programmable data processing device to produce a machine, so that an apparatus for implementing the functions specified in one or more processes of the flow charts and/or one or more blocks of the block diagrams is produced by the instructions executed by the computer or the processor of another programmable data processing device.

These computer program instructions can also be stored in a computer readable memory which is capable of guiding the computer or another programmable data processing device to operate in a particular way, so that the instructions stored in the computer readable memory produce a manufacture including the instruction apparatus which implements the functions specified in one or more processes of the flow charts and/or one or more blocks of the block diagrams.

These computer program instructions can also be loaded onto the computer or another programmable data processing device, so that a series of operation steps are performed on the computer or another programmable device to produce the computer-implemented processing. Thus the instructions executed on the computer or another programmable device provide steps for implementing the functions specified in one or more processes of the flow charts and/or one or more blocks of the block diagrams.

Evidently those skilled in the art can make various modifications and variations to the present application without departing from the spirit and scope of the present application. Thus the present application is also intended to encompass these modifications and variations therein as long as these modifications and variations to the present application come into the scope of the claims of the present application and their equivalents.

## Claims

1. A signal transmission method, comprising:
determining a third monitoring configuration information set of a first signal, wherein monitoring occasions corresponding to the third monitoring configuration information set are not more than monitoring occasions corresponding to at least one of a first monitoring configuration information set or a second monitoring configuration information set; wherein the first monitoring configuration information set is a network-level monitoring configuration information set of the first signal, and the second monitoring configuration information set is a node-level monitoring configuration information set of the first signal; and
monitoring the first signal according to the third monitoring configuration information set.

2. The method according to claim 1, wherein the determining the third monitoring configuration information set of the first signal, comprises:
obtaining at least one of the first monitoring configuration information set or the second monitoring configuration information set of the first signal, and determining the third monitoring configuration information set of the first signal according to at least one of the first monitoring configuration information set or the second monitoring configuration information set; or
determining the third monitoring configuration information set of the first signal according to high-layer signaling or a predefined rule.

3. The method according to claim 1, wherein a value of at least one monitoring configuration information in the third monitoring configuration information set is greater than or equal to a maximum value of corresponding monitoring configuration information in the first monitoring configuration information set and the second monitoring configuration information set;
wherein the monitoring configuration information comprises at least one of: a monitoring threshold, a monitoring cycle, the number of monitoring frames in a monitoring cycle, the number of monitoring occasions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources.

4. The method according to claim 1, wherein a value of at least one monitoring configuration information in the third monitoring configuration information set is less than or equal to a minimum value of corresponding monitoring configuration information in the first monitoring configuration information set and the second monitoring configuration information set;
wherein the monitoring configuration information comprises at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources.

5. The method according to claim 2, wherein the determining the third monitoring configuration information set of the first signal according to at least one of the first monitoring configuration information set or the second monitoring configuration information set, comprises:
obtaining transmission statistic data of the first signal; and
determining a value of at least one monitoring configuration information in the third monitoring configuration information set according to the transmission statistic data and at least one of the first monitoring configuration information set or the second monitoring configuration information set.

6. The method according to claim 5, wherein the determining the value of at least one monitoring configuration information in the third monitoring configuration information set according to the transmission statistic data and at least one of the first monitoring configuration information set or the second monitoring configuration information set, comprises:
in a case that a probability of a network side device to send the first signal or a probability of a node device to receive the first signal is less than a first probability threshold, setting the value of at least one monitoring configuration information in the third monitoring configuration information set to be greater than or equal to a maximum value of corresponding monitoring configuration information in the first monitoring configuration information set and the second monitoring configuration information set;
in a case that the probability of the network side device to send the first signal or the probability of the node device to receive the first signal is greater than or equal to a second probability threshold, setting the value of at least one monitoring configuration information in the third monitoring configuration information set to be less than or equal to a minimum value of corresponding monitoring configuration information in the first monitoring configuration information set and the second monitoring configuration information set;
wherein the monitoring configuration information comprises at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; and the first probability threshold is less than the second probability threshold.

7. The method according to claim 5, wherein the determining the value of at least one monitoring configuration information in the third monitoring configuration information set according to the transmission statistic data and at least one of the first monitoring configuration information set or the second monitoring configuration information set, comprises:
in a case that a probability of a network side device to not send the first signal or a probability of a node device to not receive the first signal is less than a third probability threshold, setting the value of at least one monitoring configuration information in the third monitoring configuration information set to be less than or equal to a minimum value of corresponding monitoring configuration information in the first monitoring configuration information set and the second monitoring configuration information set;
in a case that the probability of the network side device to not send the first signal or the probability of the node device to not receive the first signal is greater than or equal to a fourth probability threshold, setting the value of at least one monitoring configuration information in the third monitoring configuration information set to be greater than or equal to a maximum value of corresponding monitoring configuration information in the first monitoring configuration information set and the second monitoring configuration information set;
wherein the monitoring configuration information comprises at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; and the third probability threshold is less than the fourth probability threshold.

8. The method according to claim 5, wherein the determining the value of at least one monitoring configuration information in the third monitoring configuration information set according to the transmission statistic data and at least one of the first monitoring configuration information set or the second monitoring configuration information set, comprises:
in a case that the number of times a network side device sends the first signal continuously or the number of times a node device receives the first signal continuously is less than a first cumulative number of times threshold, setting the value of at least one monitoring configuration information in the third monitoring configuration information set to be greater than or equal to a maximum value of corresponding monitoring configuration information in the first monitoring configuration information set and the second monitoring configuration information set;
in a case that the number of times the network side device sends the first signal continuously or the number of times the node device receives the first signal continuously is greater than or equal to a second cumulative number of times threshold, setting the value of at least one monitoring configuration information in the third monitoring configuration information set to be less than or equal to a minimum value of corresponding monitoring configuration information in the first monitoring configuration information set and the second monitoring configuration information set;
wherein the monitoring configuration information comprises at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; and the first cumulative number of times threshold is less than the second cumulative number of times threshold.

9. The method according to claim 5, wherein the determining the value of at least one monitoring configuration information in the third monitoring configuration information set according to the transmission statistic data and at least one of the first monitoring configuration information set or the second monitoring configuration information set, comprises:
in a case that the number of times a network side device sends the first signal discontinuously or the number of times a node device receives the first signal discontinuously is less than a third cumulative number of times threshold, setting the value of at least one monitoring configuration information in the third monitoring configuration information set to be less than or equal to a minimum value of corresponding monitoring configuration information in the first monitoring configuration information set and the second monitoring configuration information set;
in a case that the number of times the network side device sends the first signal discontinuously or the number of times the node device receives the first signal discontinuously is greater than or equal to a fourth cumulative number of times threshold, setting the value of at least one monitoring configuration information in the third monitoring configuration information set to be greater than or equal to a maximum value of corresponding monitoring configuration information in the first monitoring configuration information set and the second monitoring configuration information set;
wherein the monitoring configuration information comprises at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; and the third cumulative number of times threshold is less than the fourth cumulative number of times threshold.

10. The method according to claim 1, further comprising:
obtaining transmission statistic data of the first signal; and
adjusting a value of monitoring configuration information in the third monitoring configuration information set of the first signal according to the transmission statistic data of the first signal.

11. The method according to claim 10, wherein the adjusting the value of monitoring configuration information in the third monitoring configuration information set of the first signal according to the transmission statistic data of the first signal, comprises:
in a case that a probability of a network side device to send the first signal or a probability of a node device to receive the first signal is less than a fifth probability threshold, increasing a value of at least one monitoring configuration information in the third monitoring configuration information set by a factor of M;
in a case that the probability of the network side device to send the first signal or the probability of the node device to receive the first signal is greater than or equal to a sixth probability threshold, decreasing a value of at least one monitoring configuration information in the third monitoring configuration information set by a factor of N;
wherein the monitoring configuration information comprises at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; the fifth probability threshold is less than the sixth probability threshold, and both M and N are real numbers greater than or equal to 1.

12. The method according to claim 10, wherein the adjusting the value of monitoring configuration information in the third monitoring configuration information set of the first signal according to the transmission statistic data of the first signal, comprises:
in a case that a probability of a network side device to not send the first signal or a probability of a node device to not receive the first signal is less than a seventh probability threshold, decreasing a value of at least one monitoring configuration information in the third monitoring configuration information set by a factor of P;
in a case that the probability of the network side device to not send the first signal or the probability of the node device to not receive the first signal is greater than or equal to an eighth probability threshold, increasing a value of at least one monitoring configuration information in the third monitoring configuration information set by a factor of Q;
wherein the monitoring configuration information comprises at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; the seventh probability threshold is less than the eighth probability threshold, and both P and Q are real numbers greater than or equal to 1.

13. The method according to claim 10, wherein the adjusting the value of monitoring configuration information in the third monitoring configuration information set of the first signal according to the transmission statistic data of the first signal, comprises:
in a case that the number of times a network side device sends the first signal continuously or the number of times a node device receives the first signal continuously is less than a fifth cumulative number of times threshold, increasing a value of at least one monitoring configuration information in the third monitoring configuration information set by a factor of X;
in a case that a probability of the network side device to send the first signal continuously or a probability of the node device to receive the first signal continuously is greater than or equal to a sixth cumulative number of times threshold, decreasing a value of at least one monitoring configuration information in the third monitoring configuration information set by a factor of Y;
wherein the monitoring configuration information comprises at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; the fifth cumulative number of times threshold is less than the sixth cumulative number of times threshold, and both X and Y are real numbers greater than or equal to 1.

14. The method according to claim 10, wherein the adjusting the value of monitoring configuration information in the third monitoring configuration information set of the first signal according to the transmission statistic data of the first signal, comprises:
in a case that the number of times a network side device sends the first signal discontinuously or the number of times a node device receives the first signal discontinuously is less than a seventh cumulative number of times threshold, decreasing a value of at least one monitoring configuration information in the third monitoring configuration information set by a factor of K;
in a case that a probability of the network side device to send the first signal discontinuously or a probability of the node device to receive the first signal discontinuously is greater than or equal to an eighth cumulative number of times threshold, increasing a value of at least one monitoring configuration information in the third monitoring configuration information set by a factor of L;
wherein the monitoring configuration information comprises at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; the seventh cumulative number of times threshold is less than the eighth cumulative number of times threshold, and both K and L are real numbers greater than or equal to 1.

15. The method according to any one of claims 1-14, wherein the first signal comprises at least one of a paging signal, a wake-up signal or a short message.

16. A signal transmission method, comprising:
determining a third monitoring configuration information set of a first signal, wherein monitoring occasions corresponding to the third monitoring configuration information set are not more than monitoring occasions corresponding to at least one of a first monitoring configuration information set or a second monitoring configuration information set; wherein the first monitoring configuration information set is a network-level monitoring configuration information set of the first signal, and the second monitoring configuration information set is a node-level monitoring configuration information set of the first signal; and
notifying a node device of the third monitoring configuration information set of the first signal.

17. The method according to claim 16, wherein the determining the third monitoring configuration information set of the first signal, comprises:
determining the third monitoring configuration information set of the first signal according to at least one of the first monitoring configuration information set or the second monitoring configuration information set of the first signal; or
determining the third monitoring configuration information set of the first signal according to high-layer signaling or a predefined rule.

18. The method according to claim 16, wherein a value of at least one monitoring configuration information in the third monitoring configuration information set is greater than or equal to a maximum value of corresponding monitoring configuration information in the first monitoring configuration information set and the second monitoring configuration information set;
wherein the monitoring configuration information comprises at least one of: a monitoring threshold, a monitoring cycle, the number of monitoring frames in a monitoring cycle, the number of monitoring occasions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources.

19. The method according to claim 16, wherein a value of at least one monitoring configuration information in the third monitoring configuration information set is less than or equal to a minimum value of corresponding monitoring configuration information in the first monitoring configuration information set and the second monitoring configuration information set;
wherein the monitoring configuration information comprises at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources.

20. The method according to claim 17, further comprising:
obtaining transmission statistic data of the first signal; and
determining the third monitoring configuration information set according to the transmission statistic data and at least one of the first monitoring configuration information set or the second monitoring configuration information set.

21. The method according to claim 20, wherein the determining a value of at least one monitoring configuration information in the third monitoring configuration information set according to the transmission statistic data and at least one of the first monitoring configuration information set or the second monitoring configuration information set, comprises:
in a case that a probability of a network side device to send the first signal or a probability of a node device to receive the first signal is less than a first probability threshold, setting the value of at least one monitoring configuration information in the third monitoring configuration information set to be greater than or equal to a maximum value of corresponding monitoring configuration information in the first monitoring configuration information set and the second monitoring configuration information set;
in a case that the probability of the network side device to send the first signal or the probability of the node device to receive the first signal is greater than or equal to a second probability threshold, setting the value of at least one monitoring configuration information in the third monitoring configuration information set to be less than or equal to a minimum value of corresponding monitoring configuration information in the first monitoring configuration information set and the second monitoring configuration information set;
wherein the monitoring configuration information comprises at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; and the first probability threshold is less than the second probability threshold.

22. The method according to claim 20, wherein the determining a value of at least one monitoring configuration information in the third monitoring configuration information set according to the transmission statistic data and at least one of the first monitoring configuration information set or the second monitoring configuration information set, comprises:
in a case that a probability of a network side device to not send the first signal or a probability of a node device to not receive the first signal is less than a third probability threshold, setting the value of at least one monitoring configuration information in the third monitoring configuration information set to be less than or equal to a minimum value of corresponding monitoring configuration information in the first monitoring configuration information set and the second monitoring configuration information set;
in a case that the probability of the network side device to not send the first signal or the probability of the node device to not receive the first signal is greater than or equal to a fourth probability threshold, setting the value of at least one monitoring configuration information in the third monitoring configuration information set to be greater than or equal to a maximum value of corresponding monitoring configuration information in the first monitoring configuration information set and the second monitoring configuration information set;
wherein the monitoring configuration information comprises at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; and the third probability threshold is less than the fourth probability threshold.

23. The method according to claim 20, wherein the determining a value of at least one monitoring configuration information in the third monitoring configuration information set according to the transmission statistic data and at least one of the first monitoring configuration information set or the second monitoring configuration information set, comprises:
in a case that the number of times a network side device sends the first signal continuously or the number of times a node device receives the first signal continuously is less than a first cumulative number of times threshold, setting the value of at least one monitoring configuration information in the third monitoring configuration information set to be greater than or equal to a maximum value of corresponding monitoring configuration information in the first monitoring configuration information set and the second monitoring configuration information set;
in a case that the number of times the network side device sends the first signal continuously or the number of times the node device receives the first signal continuously is greater than or equal to a second cumulative number of times threshold, setting the value of at least one monitoring configuration information in the third monitoring configuration information set to be less than or equal to a minimum value of corresponding monitoring configuration information in the first monitoring configuration information set and the second monitoring configuration information set;
wherein the monitoring configuration information comprises at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; and the first cumulative number of times threshold is less than the second cumulative number of times threshold.

24. The method according to claim 20, wherein the determining a value of at least one monitoring configuration information in the third monitoring configuration information set according to the transmission statistic data and at least one of the first monitoring configuration information set or the second monitoring configuration information set, comprises:
in a case that the number of times a network side device sends the first signal discontinuously or the number of times a node device receives the first signal discontinuously is less than a third cumulative number of times threshold, setting the value of at least one monitoring configuration information in the third monitoring configuration information set to be less than or equal to a minimum value of corresponding monitoring configuration information in the first monitoring configuration information set and the second monitoring configuration information set;
in a case that the number of times the network side device sends the first signal discontinuously or the number of times the node device receives the first signal discontinuously is greater than or equal to a fourth cumulative number of times threshold, setting the value of at least one monitoring configuration information in the third monitoring configuration information set to be greater than or equal to a maximum value of corresponding monitoring configuration information in the first monitoring configuration information set and the second monitoring configuration information set;
wherein the monitoring configuration information comprises at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; and the third cumulative number of times threshold is less than the fourth cumulative number of times threshold.

25. The method according to claim 17, wherein the determining the third monitoring configuration information set of the first signal according to at least one of the first monitoring configuration information set or the second monitoring configuration information set of the first signal, comprises:
obtaining transmission statistic data of the first signal; and
adjusting a value of monitoring configuration information in the third monitoring configuration information set of the first signal according to the transmission statistic data of the first signal.

26. The method according to claim 25, wherein the adjusting the value of monitoring configuration information in the third monitoring configuration information set of the first signal according to the transmission statistic data of the first signal, comprises:
in a case that a probability of a network side device to send the first signal or a probability of a node device to receive the first signal is less than a fifth probability threshold, increasing a value of at least one monitoring configuration information in the third monitoring configuration information set by a factor of M;
in a case that the probability of the network side device to send the first signal or the probability of the node device to receive the first signal is greater than or equal to a sixth probability threshold, decreasing a value of at least one monitoring configuration information in the third monitoring configuration information set by a factor of N;
wherein the monitoring configuration information comprises at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; the fifth probability threshold is less than the sixth probability threshold, and both M and N are real numbers greater than 1.

27. The method according to claim 25, wherein the adjusting the value of monitoring configuration information in the third monitoring configuration information set of the first signal according to the transmission statistic data of the first signal, comprises:
in a case that a probability of a network side device to not send the first signal or a probability of a node device to not receive the first signal is less than a seventh probability threshold, decreasing a value of at least one monitoring configuration information in the third monitoring configuration information set by a factor of P;
in a case that the probability of the network side device to not send the first signal or the probability of the node device to not receive the first signal is greater than or equal to an eighth probability threshold, increasing a value of at least one monitoring configuration information in the third monitoring configuration information set by a factor of Q;
wherein the monitoring configuration information comprises at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; the seventh probability threshold is less than the eighth probability threshold, and both P and Q are real numbers greater than 1.

28. The method according to claim 25, wherein the adjusting the value of monitoring configuration information in the third monitoring configuration information set of the first signal according to the transmission statistic data of the first signal, comprises:
in a case that the number of times a network side device sends the first signal continuously or the number of times a node device receives the first signal continuously is less than a fifth cumulative number of times threshold, increasing a value of at least one monitoring configuration information in the third monitoring configuration information set by a factor of X;
in a case that a probability of the network side device to send the first signal continuously or a probability of the node device to receive the first signal continuously is greater than or equal to a sixth cumulative number of times threshold, decreasing a value of at least one monitoring configuration information in the third monitoring configuration information set by a factor of Y;
wherein the monitoring configuration information comprises at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; the fifth cumulative number of times threshold is less than the sixth cumulative number of times threshold, and both X and Y are real numbers greater than 1.

29. The method according to claim 25, wherein the adjusting the value of monitoring configuration information in the third monitoring configuration information set of the first signal according to the transmission statistic data of the first signal, comprises:
in a case that the number of times a network side device sends the first signal discontinuously or the number of times a node device receives the first signal discontinuously is less than a seventh cumulative number of times threshold, decreasing a value of at least one monitoring configuration information in the third monitoring configuration information set by a factor of K;
in a case that a probability of the network side device to send the first signal discontinuously or a probability of the node device to receive the first signal discontinuously is greater than or equal to an eighth cumulative number of times threshold, increasing a value of at least one monitoring configuration information in the third monitoring configuration information set by a factor of L;
wherein the monitoring configuration information comprises at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; the seventh cumulative number of times threshold is less than the eighth cumulative number of times threshold, and both K and L are real numbers greater than or equal to 1.

30. The method according to claim 16, further comprising:
determining a fourth monitoring configuration information set of the first signal, wherein monitoring occasions corresponding to the fourth monitoring configuration information set are not fewer than monitoring occasions corresponding to at least one of the first monitoring configuration information set, the second monitoring configuration information set or the third monitoring configuration information set; and
sending the first signal according to the fourth monitoring configuration information set of the first signal.

31. The method according to claim 30, wherein the determining the fourth monitoring configuration information set of the first signal, comprises:
determining the fourth monitoring configuration information set of the first signal according to at least one of the first monitoring configuration information set, the second monitoring configuration information set or the third monitoring configuration information set of the first signal.

32. The method according to claim 30, wherein a value of at least one monitoring configuration information in the fourth monitoring configuration information set is not greater than a minimum value of corresponding monitoring configuration information in the first monitoring configuration information set, the second monitoring configuration information set and the third monitoring configuration information set;
wherein the monitoring configuration information comprises at least one of: a monitoring threshold, a monitoring cycle, the number of monitoring frames in a monitoring cycle, the number of monitoring occasions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources.

33. The method according to claim 30, wherein a value of at least one monitoring configuration information in the fourth monitoring configuration information set is not less than a maximum value of corresponding monitoring configuration information in the first monitoring configuration information set, the second monitoring configuration information set and the third monitoring configuration information set;
wherein the monitoring configuration information comprises at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources.

34. The method according to claim 30, wherein the determining the fourth monitoring configuration information set of the first signal according to at least one of the first monitoring configuration information set, the second monitoring configuration information set or the third monitoring configuration information set of the first signal, comprises:
obtaining transmission statistic data of the first signal; and
determining a value of at least one monitoring configuration information in the fourth monitoring configuration information set according to the transmission statistic data and at least one of the first monitoring configuration information set, the second monitoring configuration information set or the third monitoring configuration information set.

35. The method according to claim 34, wherein the determining the value of at least one monitoring configuration information in the fourth monitoring configuration information set according to the transmission statistic data and at least one of the first monitoring configuration information set, the second monitoring configuration information set or the third monitoring configuration information set, comprises:
in a case that a probability of a network side device to send the first signal or a probability of a node device to receive the first signal is less than a ninth probability threshold, setting the value of at least one monitoring configuration information in the fourth monitoring configuration information set to be less than or equal to a minimum value of corresponding monitoring configuration information in the first monitoring configuration information set, the second monitoring configuration information set and the third monitoring configuration information set;
in a case that the probability of the network side device to send the first signal or the probability of the node device to receive the first signal is greater than or equal to a tenth probability threshold, setting the value of at least one monitoring configuration information in the fourth monitoring configuration information set to be greater than or equal to a maximum value of corresponding monitoring configuration information in the first monitoring configuration information set, the second monitoring configuration information set and the third monitoring configuration information set;
wherein the monitoring configuration information comprises at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; and the ninth probability threshold is less than the tenth probability threshold.

36. The method according to claim 34, wherein the determining the value of at least one monitoring configuration information in the fourth monitoring configuration information set according to the transmission statistic data and at least one of the first monitoring configuration information set, the second monitoring configuration information set or the third monitoring configuration information set, comprises:
in a case that a probability of a network side device to not send the first signal or a probability of a node device to not receive the first signal is less than an eleventh probability threshold, setting the value of at least one monitoring configuration information in the fourth monitoring configuration information set to be greater than or equal to a maximum value of corresponding monitoring configuration information in the first monitoring configuration information set, the second monitoring configuration information set and the third monitoring configuration information set;
in a case that the probability of the network side device to not send the first signal or the probability of the node device to not receive the first signal is greater than or equal to a twelfth probability threshold, setting the value of at least one monitoring configuration information in the fourth monitoring configuration information set to be less than or equal to a minimum value of corresponding monitoring configuration information in the first monitoring configuration information set, the second monitoring configuration information set and the third monitoring configuration information set;
wherein the monitoring configuration information comprises at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; and the eleventh probability threshold is less than the twelfth probability threshold.

37. The method according to claim 34, wherein the determining the value of at least one monitoring configuration information in the fourth monitoring configuration information set according to the transmission statistic data and at least one of the first monitoring configuration information set, the second monitoring configuration information set or the third monitoring configuration information set, comprises:
in a case that the number of times a network side device sends the first signal continuously or the number of times a node device receives the first signal continuously is less than a ninth cumulative number of times threshold, setting the value of at least one monitoring configuration information in the fourth monitoring configuration information set to be less than or equal to a minimum value of corresponding monitoring configuration information in the first monitoring configuration information set, the second monitoring configuration information set and the third monitoring configuration information set;
in a case that the number of times the network side device sends the first signal continuously or the number of times the node device receives the first signal continuously is greater than or equal to a tenth cumulative number of times threshold, setting the value of at least one monitoring configuration information in the fourth monitoring configuration information set to be greater than or equal to a maximum value of corresponding monitoring configuration information in the first monitoring configuration information set, the second monitoring configuration information set and the third monitoring configuration information set;
wherein the monitoring configuration information comprises at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; and the ninth cumulative number of times threshold is less than the tenth cumulative number of times threshold.

38. The method according to claim 34, wherein the determining the value of at least one monitoring configuration information in the fourth monitoring configuration information set according to the transmission statistic data and at least one of the first monitoring configuration information set, the second monitoring configuration information set or the third monitoring configuration information set, comprises:
in a case that the number of times a network side device sends the first signal discontinuously or the number of times a node device receives the first signal discontinuously is less than an eleventh cumulative number of times threshold, setting the value of at least one monitoring configuration information in the fourth monitoring configuration information set to be greater than or equal to a maximum value of corresponding monitoring configuration information in the first monitoring configuration information set, the second monitoring configuration information set and the third monitoring configuration information set;
in a case that the number of times the network side device sends the first signal discontinuously or the number of times the node device receives the first signal discontinuously is greater than or equal to a twelfth cumulative number of times threshold, setting the value of at least one monitoring configuration information in the fourth monitoring configuration information set to be less than or equal to a minimum value of corresponding monitoring configuration information in the first monitoring configuration information set, the second monitoring configuration information set and the third monitoring configuration information set;
wherein the monitoring configuration information comprises at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; and the eleventh cumulative number of times threshold is less than the twelfth cumulative number of times threshold.

39. The method according to claim 31, further comprising:
obtaining transmission statistic data of the first signal; and
adjusting a value of monitoring configuration information in the fourth monitoring configuration information set of the first signal according to the transmission statistic data of the first signal.

40. The method according to claim 39, wherein the adjusting the value of monitoring configuration information in the fourth monitoring configuration information set of the first signal according to the transmission statistic data of the first signal, comprises:
in a case that a probability of a network side device to send the first signal or a probability of a node device to receive the first signal is less than a thirteenth probability threshold, decreasing a value of at least one monitoring configuration information in the fourth monitoring configuration information set by a factor of N;
in a case that the probability of the network side device to send the first signal or the probability of the node device to receive the first signal is greater than or equal to a fourteenth probability threshold, increasing a value of at least one monitoring configuration information in the fourth monitoring configuration information set by a factor of M;
wherein the monitoring configuration information comprises at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; the thirteenth probability threshold is less than the fourteenth probability threshold, and both M and N are real numbers greater than 1.

41. The method according to claim 39, wherein the adjusting the value of monitoring configuration information in the fourth monitoring configuration information set of the first signal according to the transmission statistic data of the first signal, comprises:
in a case that a probability of a network side device to not send the first signal or a probability of a node device to not receive the first signal is less than a fifteenth probability threshold, increasing a value of at least one monitoring configuration information in the fourth monitoring configuration information set by a factor of Q;
in a case that the probability of the network side device to not send the first signal or the probability of the node device to not receive the first signal is greater than or equal to a sixteenth probability threshold, decreasing a value of at least one monitoring configuration information in the fourth monitoring configuration information set by a factor of P;
wherein the monitoring configuration information comprises at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; the fifteenth probability threshold is less than the sixteenth probability threshold, and both P and Q are real numbers greater than 1.

42. The method according to claim 39, wherein the adjusting the value of monitoring configuration information in the fourth monitoring configuration information set of the first signal according to the transmission statistic data of the first signal to obtain the fourth monitoring configuration information set, comprises:
in a case that the number of times a network side device sends the first signal continuously or the number of times a node device receives the first signal continuously is less than a thirteenth cumulative number of times threshold, decreasing a value of at least one monitoring configuration information in the fourth monitoring configuration information set by a factor of Y;
in a case that a probability of the network side device to send the first signal continuously or a probability of the node device to receive the first signal continuously is greater than or equal to a fourteenth cumulative number of times threshold, increasing a value of at least one monitoring configuration information in the fourth monitoring configuration information set by a factor of X;
wherein the monitoring configuration information comprises at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; the thirteenth cumulative number of times threshold is less than the fourteenth cumulative number of times threshold, and both X and Y are real numbers greater than 1.

43. The method according to claim 39, wherein the adjusting the value of monitoring configuration information in the fourth monitoring configuration information set of the first signal according to the transmission statistic data of the first signal, comprises:
in a case that the number of times a network side device sends the first signal discontinuously or the number of times a node device receives the first signal discontinuously is less than a fifteenth cumulative number of times threshold, increasing a value of at least one monitoring configuration information in the fourth monitoring configuration information set by a factor of L;
in a case that a probability of the network side device to send the first signal discontinuously or a probability of the node device to receive the first signal discontinuously is greater than or equal to a sixteenth cumulative number of times threshold, decreasing a value of at least one monitoring configuration information in the fourth monitoring configuration information set by a factor of K;
wherein the monitoring configuration information comprises at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources; the fifteenth cumulative number of times threshold is less than the sixteenth cumulative number of times threshold, and both K and L are real numbers greater than 1.

44. The method according to any one of claims 16-43, wherein the first signal comprises at least one of a paging signal, a wake-up signal or a short message.

45. A node device, comprising a processor, a memory and a transceiver;
the transceiver is configured to receive and send data under control of the processor;
the memory is configured to store computer instructions;
the processor is configured to read the computer instructions to perform following operations:
determining a third monitoring configuration information set of a first signal, wherein monitoring occasions corresponding to the third monitoring configuration information set are not more than monitoring occasions corresponding to at least one of a first monitoring configuration information set or a second monitoring configuration information set; wherein the first monitoring configuration information set is a network-level monitoring configuration information set of the first signal, and the second monitoring configuration information set is a node-level monitoring configuration information set of the first signal; and
monitoring the first signal according to the third monitoring configuration information set.

46. A network side device, comprising a processor, a memory and a transceiver;
the transceiver is configured to receive and send data under control of the processor;
the memory is configured to store computer instructions;
the processor is configured to read the computer instructions to perform following operations:
determining a third monitoring configuration information set of a first signal, wherein monitoring occasions corresponding to the third monitoring configuration information set are not more than monitoring occasions corresponding to at least one of a first monitoring configuration information set or a second monitoring configuration information set; wherein the first monitoring configuration information set is a network-level monitoring configuration information set of the first signal, and the second monitoring configuration information set is a node-level monitoring configuration information set of the first signal; and
notifying a node device of the third monitoring configuration information set of the first signal.

47. A node device, comprising:
a processing module, configured to determine a third monitoring configuration information set of a first signal, wherein monitoring occasions corresponding to the third monitoring configuration information set are not more than monitoring occasions corresponding to at least one of a first monitoring configuration information set or a second monitoring configuration information set; wherein the first monitoring configuration information set is a network-level monitoring configuration information set of the first signal, and the second monitoring configuration information set is a node-level monitoring configuration information set of the first signal; and
a monitoring module, configured to monitor the first signal according to the third monitoring configuration information set.

48. The node device according to claim 47, wherein the processing module is further configured to:
obtain at least one of the first monitoring configuration information set or the second monitoring configuration information set of the first signal, and determine the third monitoring configuration information set of the first signal according to at least one of the first monitoring configuration information set or the second monitoring configuration information set; or
determine the third monitoring configuration information set of the first signal according to high-layer signaling or a predefined rule.

49. The node device according to claim 47, wherein a value of at least one monitoring configuration information in the third monitoring configuration information set is greater than or equal to a maximum value of corresponding monitoring configuration information in the first monitoring configuration information set and the second monitoring configuration information set;
wherein the monitoring configuration information comprises at least one of: a monitoring threshold, a monitoring cycle, the number of monitoring frames in a monitoring cycle, the number of monitoring occasions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources.

50. The node device according to claim 47, wherein a value of at least one monitoring configuration information in the third monitoring configuration information set is less than or equal to a minimum value of corresponding monitoring configuration information in the first monitoring configuration information set and the second monitoring configuration information set;
wherein the monitoring configuration information comprises at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources.

51. The node device according to claim 48, wherein the processing module is further configured to:
obtain transmission statistic data of the first signal; and
determine a value of at least one monitoring configuration information in the third monitoring configuration information set according to the transmission statistic data and at least one of the first monitoring configuration information set or the second monitoring configuration information set.

52. The node device according to claim 47, further comprising an adjustment module further configured to:
obtain transmission statistic data of the first signal; and
adjust a value of monitoring configuration information in the third monitoring configuration information set of the first signal according to the transmission statistic data of the first signal.

53. The node device according to any one of claims 47-52, wherein the first signal comprises at least one of a paging signal, a wake-up signal or a short message.

54. A network side device, comprising:
a processing module, configured to determine a third monitoring configuration information set of a first signal, wherein monitoring occasions corresponding to the third monitoring configuration information set are not more than monitoring occasions corresponding to at least one of a first monitoring configuration information set or a second monitoring configuration information set; wherein the first monitoring configuration information set is a network-level monitoring configuration information set of the first signal, and the second monitoring configuration information set is a node-level monitoring configuration information set of the first signal; and
a sending module, configured to notify a node device of the third monitoring configuration information set of the first signal.

55. The network side device according to claim 54, wherein the processing module is further configured to:
determine the third monitoring configuration information set of the first signal according to at least one of the first monitoring configuration information set or the second monitoring configuration information set of the first signal; or
determine the third monitoring configuration information set of the first signal according to high-layer signaling or a predefined rule.

56. The network side device according to claim 54, wherein a value of at least one monitoring configuration information in the third monitoring configuration information set is greater than or equal to a maximum value of corresponding monitoring configuration information in the first monitoring configuration information set and the second monitoring configuration information set;
wherein the monitoring configuration information comprises at least one of: a monitoring threshold, a monitoring cycle, the number of monitoring frames in a monitoring cycle, the number of monitoring occasions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources.

57. The network side device according to claim 54, wherein a value of at least one monitoring configuration information in the third monitoring configuration information set is less than or equal to a minimum value of corresponding monitoring configuration information in the first monitoring configuration information set and the second monitoring configuration information set;
wherein the monitoring configuration information comprises at least one of: a monitoring threshold, a monitoring cycle, the number of monitoring frames in a monitoring cycle, the number of monitoring positions in a monitoring frame, a length of continuous monitoring time corresponding to a monitoring occasion in a monitoring frame, the number of symbols corresponding to a monitoring occasion in a monitoring frame, the number of monitoring frequency domain resources, or the number of monitoring spatial domain resources.

58. The network side device according to claim 55, wherein the processing module is further configured to:
obtain transmission statistic data of the first signal; and
determine the third monitoring configuration information set according to the transmission statistic data and at least one of the first monitoring configuration information set or the second monitoring configuration information set.

59. The network side device according to claim 55, wherein the processing module is specifically configured to:
obtain transmission statistic data of the first signal; and
adjust a value of monitoring configuration information in the third monitoring configuration information set of the first signal according to the transmission statistic data of the first signal.

60. The network side device according to claim 54, further comprising a determining unit further configured to:
determine a fourth monitoring configuration information set of the first signal, wherein monitoring occasions corresponding to the fourth monitoring configuration information set are not fewer than monitoring occasions corresponding to at least one of the first monitoring configuration information set, the second monitoring configuration information set or the third monitoring configuration information set; and
send the first signal according to the fourth monitoring configuration information set of the first signal.

61. The network side device according to any one of claims 54-60, wherein the first signal comprises at least one of a paging signal, a wake-up signal or a short message.

62. A computer readable storage medium, wherein the computer readable storage medium stores computer executable instructions which are configured to cause the computer to perform the method of any one of claims 1 to 15.

63. A computer readable storage medium, wherein the computer readable storage medium stores computer executable instructions which are configured to cause the computer to perform the method of any one of claims 16 to 44.
